# EUROPÄISCHE PATENTSCHRIFT

(11) **EP 1 279 528 B1**
(45) Veröffentlichungstag und Bekanntmachung des Hinweises auf die Patenterteilung: **25.05.2005**
(21) Anmeldenummer: 02024101.4
(22) Anmeldetag: 21.03.1997
(51) Int. Cl.: B60D 1/54, B60D 1/52

(54) **Anhängekupplung**
Trailer coupling
Attelage de remorque

(30) Priorität: 01.04.1996 DE 19612959
(43) Veröffentlichungstag der Anmeldung: 29.01.2003
(62) Teilanmeldung aus: 00101824.1
(73) Patentinhaber: ORIS FAHRZEUGTEILE HANS RIEHLE GmbH, 71696 Möglingen (DE)
(72) Erfinder: Gentner, Wolfgang, 71254 Ditzingen-Heimerdingen (DE); Kleb, Emmerich, 71606 Markgröningen (DE); Riehle, Jörg, 71679 Asperg (DE); Riehle, Hans, 71638 Ludwigsburg (DE)
(74) Vertreter: HOEGER, STELLRECHT & PARTNER Patentanwälte

(56) Entgegenhaltungen:
- WO-A-91/15374
- WO-A-97/10111
- DE-A- 3 442 514
- US-A- 4 744 583

## Beschreibung

Die Erfindung betrifft eine Anhängekupplung für Kraftfahrzeuge, insbesondere Personenkraftfahrzeuge, mit einer Kupplungskugel, mit einem Kugelhals, dessen einer Endbereich abgekröpft ist und die Kupplungskugel trägt und dessen anderer Endbereich mit einem Lagerelement verbunden ist, mit einem das Lagerelement schwenkbar lagernden fahrzeugfesten Schwenklager, wobei der Kugelhals mit der Kupplungskugel durch ein Verschwenken um die Schwenkachse von einer Arbeitsstellung, in welcher sich der Kugelhals im wesentlichen längs einer zur Fahrzeuglängsrichtung parallelen vertikalen Längsebene erstreckt, in eine Ruhestellung, und umgekehrt verschwenkbar ist.

Eine derartige Anhängekupplung ist aus der DE-C-26 19 913 bekannt.

Die in dieser Druckschrift beschriebene Anhängekupplung hat jedoch den Nachteil, daß sie, bezogen auf den Stoßfänger, in der Ruhestellung gegenüber der Arbeitsstellung noch weiter nach unten übersteht und somit die Bodenfreiheit des Kraftfahrzeugs negativ beeinträchtigt.

Der Erfindung liegt daher die Aufgabe zugrunde, eine Anhängekupplung der gattungsgemäßen Art derart zu verbessern, daß diese in ihrer Ruhestellung die Bodenfreiheit nicht mehr beeinträchtigt.

Diese Aufgabe wird bei einer Anhängekupplung der eingangs beschriebenen Art erfindungsgemäß dadurch gelöst, daß in der Ruhestellung die Einheit aus Kugelhals und Kupplungskugel in einer vom Stoßfänger gegen Sicht abgedeckten und somit oberhalb einer 15° Sichtlinie liegenden Stellung steht und die Bodenfreiheit nicht negativ beeinträchtigt, daß zur Durchführung der Schwenkbewegung um die Schwenkachse ein einen Motor aufweisender, vorzugsweise einen Elektromotor aufweisender, elektrischer Antrieb vorgesehen ist, so daß mit dem Motor ein motorgetrieben ablaufendes Verschwenken von Kugelhals und Kupplungskugel zwischen der Arbeitsstellung und der Ruhestellung durchführbar ist,daß zum Ansteuern des Antriebs für das Bewegen von Kugelhals und Kupplungskugel zwischen der Arbeitsstellung und der Ruhestellung eine Steuerung vorgesehen ist, und daß die Steuerung ein Bewegen des Kugelhalses beim Fahren des Fahrzeugs verhindert.

Eine derartige Ausbildung der Steuerung hat den großen Vorteil, daß diese eine optimale Sicherheit für den Fall gewährleistet, daß aufgrund von Fehlbetätigungen oder anderen Fehlfunktionen ein Verschwenken des Kugelhalses während der Fahrt ausgelöst wird.

Dies läßt sich beispielsweise dadurch realisieren, daß die Steuerung den Antrieb für das Verschwenken des Kugelhalses dann blockiert, wenn der Motor des Fahrzeugs läuft. In diesem Fall kann das Verschwenken des Kugelhalses nur dann erfolgen, wenn der Motor des Fahrzeugs abgeschaltet ist. Damit ist sichergestellt, daß während der Fahrt kein Verschwenken des Kugelhalses durch den mit einem Motor versehenen Antrieb erfolgen kann.

Vorzugsweise ist eine derartige Blockierung des Antriebs mittels der Steuerung dadurch realisierbar, daß die Steuerung eine Stromversorgung für den Antrieb unterbricht.

Alternativ oder ergänzend hierzu ist eine weitere Verbesserung der Bedienungssicherheit dadurch erreichbar, daß die Steuerung ein Laufen des Motors des Fahrzeugs nur dann zuläßt, wenn der Kugelhals in der Arbeitsstellung oder in der Ruhestellung steht, so daß hiermit wiederum sichergestellt ist, daß ein Betreiben des Fahrzeugs nur dann möglich ist, wenn der Kugelhals in einer von zwei definierten Stellungen, nämlich der Arbeitsstellung oder der Ruhestellung, steht. Damit sind alle Fehlbedienungen dergestalt, daß bei in irgendeiner Zwischenstellung zwischen der Arbeitsstellung und der Ruhestellung stehendem Kugelhals ein Fahren mit dem Fahrzeug erfolgt, ausgeschlossen.

Rein prinzipiell wäre es möglich, die Arbeitsstellung oder die Ruhestellung des Kugelhalses über eine Abfrage, beispielsweise eine Abfrage der Umdrehungen des Antriebs, zu erfassen. Aus Sicherheitsgründen ist es jedoch besonders zweckmäßig, wenn die Steuerung die Arbeitsstellung und/oder die Ruhestellung des Kugelhalses über einen jeweils diesen Stellungen zugeordneten Sensor erfaßt, so daß über diesen Sensor eine direkte, vom Antrieb unabhängige Rückmeldung auf die Steuerung erfolgt.

Die Arbeitsstellung des Kugelhalses kann in unterschiedlichster Art und Weise abgefragt werden. Beispielsweise ist es möglich, mittels des Sensors die Arbeitsstellung dadurch abzufragen, daß der Kugelhals oder das Lagerelement in einer der Arbeitsstellung entsprechenden Stellung stehen.

Eine erhöhte Sicherheit ist dadurch gegeben, daß die Steuerung die Arbeitsstellung des Kugelhalses über einen die verriegelnde Stellung der Verriegelungsvorrichtung erfassenden Sensor erkennt. D. h., die Arbeitsstellung wird nur dann erfaßt, wenn gleichzeitig die Verriegelungsvorrichtung in der verriegelnden Stellung steht und somit auch sichergestellt ist, daß der Kugelhals nicht nur in der Arbeitsstellung steht, sondern auch gleichzeitig durch die Verriegelungsvorrichtung gesichert ist.

Eine derartige besonders sichere Erfassung der Arbeitsstellung ist beispielsweise dadurch realisierbar, daß sowohl die Arbeitsstellung des Kugelhalses als solche als auch die verriegelnde Stellung der Verriegelungsvorrichtung entweder über eine mechanische Und-Verknüpfung und einen Sensor oder über zwei diese jeweils erfassende Sensoren erfaßt werden.

Um eine besonders einfache und sichere Bedienung des Verschwenkens, insbesondere des Antriebs zum Verschwenken, zu ermöglichen und insbesondere auszuschließen, daß durch Fehlbedienung der Kugelhals in irgendeiner Zwischenstellung zwischen der Arbeitsstellung und der Ruhestellung stehen bleibt, ist vorzugsweise vorgesehen, daß die Steuerung nach einem einmaligen Betätigen eines Schaltelements den Motor so lange mit Strom speist, bis der Kugelhals entweder die Arbeitsstellung oder die Ruhestellung erreicht hat.

Um zusätzlich noch die Möglichkeit zu schaffen, daß eine Bedienungsperson dann, wenn beispielsweise ein Hindernis im Schwenkweg von Kugelhals und Kupplungskugel auftaucht oder erst nach Betätigen des Schaltelements und somit Auslösen der Schwenkbewegung entdeckt wird, die Bewegung des Kugelhalses unterbrechen kann, ist eine Notabschaltung vorgesehen.

Rein prinzipiell wäre es möglich, als weiteres Sicherheitselement die Steuerung so auszulegen, daß bei einem Betätigen des Schaltelements im Verlauf einer Schwenkbewegung des Kugelhalses diese unterbrochen wird.

Besonders vorteilhaft ist es jedoch, wenn die Steuerung nach einem Betätigen des Schaltelements im Verlauf der Schwenkbewegung des Kugelhalses zwischen der Arbeitsstellung und der Ruhestellung die bis zu diesem Betätigen bestehende Schwenkrichtung umkehrt. Damit wird die Möglichkeit geschaffen, daß bei Entdecken eines Hindernisses im Schwenkbereich Kugelhals und Kupplungskugel sich nicht weiterbewegen, sondern die Schwenkbewegung nicht nur unterbrechen, sondern umkehren, wobei hierbei davon ausgegangen wird, daß der Kugelhals und die Kupplungskugel nach Umkehr der Schwenkbewegung in die Richtung zurückbewegt werden, aus welcher sie kommen, wobei in diese Richtung schwerlich ein Hindernis bestehen kann.

Eine weitere Sicherheitsfunktion erhält man dadurch, daß die Steuerung eine Drehmomenterkennung für den Antrieb umfaßt, welche ein Überschreiten einer Drehmomentschwelle des Antriebs erkennt. Damit ist sichergestellt, daß auch dann, wenn der Kugelhals oder die Kupplungskugel unverhoffterweise gegen ein Hindernis laufen, weder an dem Hindernis noch an der erfindungsgemäßen Kupplung Schaden entstehen kann.

Die Drehmomenterkennung könnte nun dazu dienen, ein Signal an die Steuerung abzugeben, welches diese veranlaßt, die Schwenkbewegung des Kugelhalses zu unterbrechen.

Noch vorteilhafter ist es jedoch, wenn die Drehmomenterkennung bei Überschreiten der Drehmomentschwelle ein Signal abgibt, so daß die Steuerung die bisherige Schwenkrichtung umkehrt. Damit wird in gleicher Weise, wie bereits beim Betätigen der Schalteinrichtung dargelegt, einerseits sichergestellt, daß Kugelhals oder Kupplungskugel nicht gegen ein Hindernis laufen und nachhaltig weiter gegen dieses wirken, sondern ihre Schwenkbewegung unterbrechen und sogar umkehren und somit beispielsweise in die Stellung, aus der sie kommen, zurückschwenken.

Im einfachsten Fall ist beispielsweise vorgesehen, daß die Drehmomentschwelle in allen Stadien der Schwenkbewegung dieselbe ist.

Um jedoch - insbesondere im Fall einer langen Verweildauer von Kugelhals und Kupplungskugel in der Arbeitsstellung oder der Ruhestellung - zum Verlassen dieser Stellungen ein möglichst großes Losbrechmoment zu haben, ist vorzugsweise vorgesehen, daß die Drehmomentschwelle in der Arbeitsstellung und der Ruhestellung bis zum Verlassen derselben höher liegt als danach. Damit wird das Losbrechmoment für das Verlassen der Arbeitsstellung oder Ruhestellung erhöht, was jedoch keine Einbuße an Sicherheit darstellt, solange nach Verlassen der Arbeitsstellung oder Ruhestellung die Drehmomentschwelle wieder abgesenkt wird.

Die Drehmomenterkennung kann auf die unterschiedlichste Art und Weise arbeiten. Eine einfache Lösung hierzu sieht vor, daß die Drehmomenterkennung die Stromaufnahme des Motors erfaßt.

Hinsichtlich der Anordnung des Schaltelements der Steuerung wurden im Zusammenhang mit der bisherigen Erläuterung der einzelnen Ausführungsbeispiele keine näheren Angaben gemacht. So sieht eine besonders vorteilhafte Lösung vor, daß das Schaltelement und die Steuerung im Kofferraum des Kraftfahrzeugs angeordnet sind. Eine derartige Anordnung bietet den Vorteil einer relativ einfachen Unterbringung der Steuerung, insbesondere nahe der übrigen Kupplungskomponenten, und außerdem den Vorteil, daß das Schaltelement ebenfalls an der Steuerung angebracht werden kann und vom Kofferraum aus die Steuerung betätigt werden kann.

Ferner sieht ein besonders vorteilhaftes Ausführungsbeispiel einer erfindungsgemäßen Anhängekupplung vor, daß die Kupplung nur eine elektrische Funktionsgruppe, umfassend die Steuerung, und nur eine mit dieser verbundene mechanische Funktionsgruppe, umfassend den Querträgerkörper mit dem an diesem montierten Antrieb, dem Schwenklager sowie den an diesem gelagerten Kugelhals mit Kupplungskugel umfaßt.

Damit sind bei Montage der Kupplung nur die elektrische Funktionsgruppe und die mechanische Funktionsgruppe zu montieren, letztere gemeinsam mit den Seitenträgern, so daß eine äußerst einfache und kostensparende Montage der erfindungsgemäßen Kupplung möglich ist.

Alternativ oder ergänzend sieht eine vorteilhafte Lösung vor, daß der Kugelhals in der Ruhestellung in einem Ruhestellungsraum angeordnet ist, welcher oberhalb einer durch eine Bodengruppe der Fahrzeugkarosserie und der Stoßfängereinheit definierten bodenseitigen Fläche des Kraftfahrzeugs liegt.

Durch dieses Vorsehen des Ruhestellungsraums ist die die Bodenfreiheit nicht negativ beeinträchtigende Ruhestellung des Kugelhalses besonders vorteilhaft erreichbar.

Alternativ oder ergänzend ist es ferner günstig, wenn bei in der Ruhestellung stehender Kupplungskugel der sich an diese anschließende abgekröpfte Endbereich des Kugelhalses von einer der Fahrbahnoberfläche abgewandten Seite der Kupplungskugel ausgehend erstreckt.

Der Vorteil der erfindungsgemäßen Lösung ist darin zu sehen, daß die erfindungsgemäße Drehung des Kugelhalses die Positionierung des Kugelhalses in der Ruhestellung erlaubt, in der dieser die Bodenfreiheit des Fahrzeugs nicht negativ beeinträchtigt.

Alternativ oder ergänzend läßt sich die erfindungsgemäße Aufgabe bei einem weiteren Ausführungsbeispiel in vorteilhafter Weise dadurch lösen, daß der abgekröpfte Endbereich des Kugelhalses in der Ruhestellung auf einer der Fahrbahnoberfläche abgewandten Seite einer in Höhe eines tiefsten Punktes der in Ruhestellung stehenden Kupplungskugel verlaufenden horizontalen Ebene liegt.

Insbesondere ist dabei die horizontale Ebene mindestens in Höhe des tiefsten Punktes des in Arbeitsstellung stehenden Kugelhalses angeordnet.

Mit dieser Definition der Ruhestellung ist sichergestellt, daß die Kupplungskugel den tiefsten Punkt der Einheit aus Kugelhals und Kupplungskugel definiert und der Kugelhals mit dem abgekröpften Ende sich maximal bis zu diesem Punkt erstreckt, vorzugsweise jedoch aus Gründen einer raumsparenden Anordnung höher liegt.

Noch vorteilhafter ist es, wenn der gesamte Kugelhals insbesondere mit dem Lagerelement in der Ruhestellung auf einer der Fahrbahnfläche abgewandten Seite einer in Höhe des tiefsten Punktes der in Ruhestellung stehenden Kupplungskugel verlaufenden horizontalen Ebene liegt, so daß der gesamte Kugelhals sich maximal bis zu dieser Ebene, vorzugsweise auf der der Fahrbahnoberfläche abgewandten Seite dieser Ebene, erstreckt.

Alternativ oder ergänzend sieht eine weitere vorteilhafte Lösung der erfindungsgemäßen Aufgabe vor, daß die Kupplungskugel in der Ruhestellung in einem Abstand von einer Fahrbahnoberfläche angeordnet ist, der gleich oder kleiner ist als ein Abstand des abgekröpften Endbereichs von der Fahrbahnoberfläche.

Insbesondere liegt dabei ein tiefster Punkt von Kugelhals oder Kupplungskugel in der Ruhestellung mindestens in Höhe eines tiefsten Punktes des Kugelhalses in Arbeitsstellung.

Auch diese Definition legt eine Bedingung fest, welche es ermöglicht, die Einheit aus Kugelhals und Kupplungskugeln mit günstigem Raumbedarf und ausreichender Höhe über der Fahrbahnoberfläche zu positionieren.

Besonders einfach läßt sich sicherstellen, daß Kugelhals und Kupplungskugel in der Ruhestellung ausreichend weit aus dem Sichtbereich entfernt sind, wenn der Kugelhals und die Kupplungskugel in der Ruhestellung auf einer der Fahrbahnoberfläche abgewandten Seite einer durch eine Unterkante des Schwenklagers definierten horizontalen Ebene liegen.

Eine weitere Definition der erfindungsgemäßen Lösung sieht vor, daß die Kupplungskugel eine dem abgekröpften Ende des Kugelhalses gegenüberliegende obere Kugelkappenfläche aufweist, welche in der Arbeitsstellung der Fahrbahnoberfläche abgewandt und in der Ruhestellung dieser zumindest schräg zugewandt ist.

Besonders vorteilhaft ist eine erfindungsgemäße Lösung dann, wenn das Schwenklager bezüglich der Krümmungsebene in Richtung einer der Ruhestellung gegenüberliegenden Seite einer Krümmungsebene des Kugelhalses unsymmetrisch versetzt angeordnet ist.

Der Versatz kann beispielsweise so gering sein, daß das Schwenklager lediglich unsymmetrisch zur Krümmungsebene des Kugelhalses liegt, jedoch noch von der Krümmungsebene geschnitten wird.

Ihr Versatz kann aber auch so groß sein, daß das Schwenklager oder mindestens der Schwenkkörper seitlich neben der Krümmungsebene des Kugelhalses liegen.

Die Aufgabe wird außerdem bei einer um eine Schwenkachse schwenkbare Anhängekupplung der eingangs beschriebenen Art erfindungsgemäß dadurch gelöst, daß eine Projektion einer Kupplungskugelmittelachse auf die vertikale Längsebene beim Schwenken des Kugelhalses um die Schwenkachse von der Arbeitsstellung in die Ruhestellung eine Drehung um einen Winkel von mindestens 80° erfährt und daß ein tiefster Punkt von Kugelhals und Kupplungskugel in der Ruhestellung mindestens in Höhe eines tiefsten Punktes des Kugelhalses in Arbeitsstellung liegt.

Bei einer derartigen Drehung der Projektion der Kupplungskugelmittelachse auf die Längsebene erfolgt gleichzeitig eine entsprechende Drehung des Kugelhalses, so daß der Kugelhals durch die Schwenkbewegung um die Schwenkachse so weit geneigt wird, daß er in der Ruhestellung mit seinem tiefsten Punkt mindestens genau so hoch über der Fahrbahnoberfläche liegt als in Arbeitsstellung und somit die Einheit aus Kugelhals und Kupplungskugel in der Ruhestellung die Bodenfreiheit nicht beeinträchtigt.

Besonders vorteilhaft ist es, wenn die Projektion der Kupplungskugelmittelachse auf die vertikale Längsebene beim Schwenken um die Schwenkachse eine Drehung von mehr als 90°, noch besser mehr als 100° und bevorzugterweise mehr als 120° erfährt. Insbesondere bei einem Verschwenken der Kupplungskugelmittelachse um mehr als 90°, vorzugsweise mehr als 120°, läßt sich der von Kugelhals und Kupplungskugel in der Ruhestellung benötigte Ruhestellungsraum in Fahrzeugrichtung besonders klein ausbilden.

Die Drehung der Projektion der Kupplungskugelmittelachse auf die Längsebene beträgt maximal 210°, noch besser maximal 180°, vorzugsweise maximal 160°.

Vorzugsweise schließt die Projektion der Kupplungskugelmittelachse auf die vertikale Längsebene mit der horizontalen einen Winkel im Bereich von ungefähr 30° bis ungefähr 150°, noch besser im Bereich von ungefähr 40° bis ungefähr 140° ein, damit ein in Fahrzeuglängsrichtung kurz bauender Ruhestellungsraum erhältlich ist.

Mit der erfindungsgemäßen Lehre ist es möglich, die Einheit aus Kugelhals und Kupplungskugel unter dem Stoßfänger des Kraftfahrzeugs hindurch in eine vom Stoßfänger gegen Sicht abgedeckte und somit oberhalb einer 15°-Sichtlinie liegende sowie die Bodenfreiheit nicht negativ beeinflussende Ruhestellung zu bewegen.

Eine besonders vorteilhafte Lösung der erfindungsgemäßen Aufgabe ist dann erreichbar, wenn die Projektion der Kupplungskugelmittelachse auf die vertikale Längsebene in der Ruhestellung in einem Winkel von mindestens 170° gegenüber einer Horizontalen verläuft. Noch besser ist es, wenn die Projektion der Kupplungskugelmittelachse auf eine vertikale Längsebene in der Ruhestellung in einem Winkel von mehr als 180° noch besser mehr als 210° gegenüber einer Horizontalen verläuft.

Eine besonders vorteilhafte Realisierung der erfindungsgemäßen Lösung sieht vor, daß die Projektion der Schwenkachse auf eine zur Fahrzeuglängsrichtung parallele vertikale Längsebene um einen Winkel gegenüber der Horizontalen geneigt ist, welcher in einem Winkelbereich von ungefähr 0° bis ungefähr 60° liegt.

Noch besser lassen sich Kugelhals und Kupplungskugel in der Ruhestellung dann positionieren, wenn der Winkelbereich bis maximal 50° reicht.

Die Bodenfreiheit während des Verschwenkens läßt sich dadurch verbessern, daß der Winkelbereich bei mindestens 15° beginnt, noch besser bei mindestens 30°.

Darüber hinaus ist es bei einer erfindungsgemäßen Lösung zweckmäßig, wenn die Projektion der Schwenkachse auf eine horizontale Ebene um einen Winkel schräg zur Fahrzeuglängsrichtung verläuft, welcher in einem Winkelbereich von ungefähr 20° bis ungefähr 70° liegt.

Besonders vorteilhaft ist es, wenn der Winkelbereich zwischen ungefähr 30° und ungefähr 65° noch besser zwischen ungefähr 40° und ungefähr 60° liegt.

Vorteilhafterweise ist vorgesehen, daß die Projektion der Schwenkachse auf eine vertikale, senkrecht zur Fahrzeuglängsrichtung verlaufende Querebene um einen Winkel gegenüber der Horizontalen geneigt ist, welcher in einem Winkelbereich von ungefähr 0° bis ungefähr 60° liegt.

Hiermit ist sichergestellt, daß die Einheit aus Kugelhals und Kupplungskugel in der Ruhestellung so weit gedreht ist, daß sie in einfacher Weise aus dem Sichtbereich herausbewegbar, und raumsparend positionierbar ist.

Besonders raumsparend läßt sich der Kugelhals mit der Kupplungskugel dann positionieren, wenn in der Ruhestellung die Krümmungsebene des Kugelhalses mit einer horizontalen Ebene einen Winkel im Bereich von ungefähr 30° bis ungefähr 150° noch besser ungefähr 40 bis ungefähr 140° einschließt.

Im Zusammenhang mit der bisherigen Erläuterung der einzelnen Ausführungsbeispiele wurde nicht näher erläutert, wie die Durchführung der Schwenkbewegung erfolgen soll.

Hinsichtlich der Wirkung des Antriebs auf das Lagerelement zur Durchführung der Schwenkbewegung sind alle möglichen Lösungen eines zwischengeschalteten Getriebes denkbar. Besonders vorteilhaft ist es jedoch, wenn der Antrieb über ein selbsthemmendes Getriebe auf das Lagerelement wirkt, da in diesem Fall bereits das selbsthemmende Getriebe dazu eingesetzt werden kann, den Kugelhals mit der Kupplungskugel in der Ruhestellung und/oder der Arbeitsstellung zu fixieren. Außerdem wirken keine auf die Kupplungskugel wirkenden Kräfte als Momente auf den Motor des Antriebs zurück, so daß der Motor lediglich so ausgelegt sein muß, daß er in der Lage ist, ohne Krafteinwirkung auf Kupplungskugel und Kugelhals, diese zwischen der Arbeitsstellung und der Ruhestellung zu verschwenken.

Um die Arbeitsstellung und/oder die Ruhestellung eindeutig zu definieren, ist vorzugsweise vorgesehen, daß die Schwenkbewegung des Kugelhalses durch einen fahrzeugfesten Anschlag begrenzt ist. Vorzugsweise ist dies ein Anschlag, welcher auf das Lagerelement wirkt.

Im einfachsten Fall ist bei einer derartigen Lösung vorgesehen, daß das Lagerelement einen Vorsprung aufweist, welcher zumindest in der Ruhestellung oder der Anschlagstellung gegen den fahrzeugfesten Anschlag wirkt.

Bevorzugt wird in diesem Fall mit dem gegen einen fahrzeugfesten Anschlag wirkenden Vorsprung die Arbeitsstellung festgelegt, während die Ruhestellung des Kugelhalses beispielsweise auch dadurch festlegbar ist, daß der Kugelhals selbst mit irgendeinem Bereich desselben in der Ruhestellung an einer fahrzeugfesten Anschlagfläche zur Anlage kommt.

Wie bereits im Vorstehenden erläutert, ist durch ein selbsthemmendes Getriebe erreichbar, daß der Kugelhals mit der Kupplungskugel in der Arbeitsstellung stehen bleibt, auch wenn, beispielsweise durch einen Anhänger, auf die Kupplungskugel die üblichen Zug- und Bremskräfte wirken.

Um jedoch ein Höchstmaß an Sicherheit zu bieten, ist ergänzend oder alternativ zu einem selbsthemmenden Getriebe vorgesehen, daß der Kugelhals in der Arbeitsstellung durch eine Verriegelungsvorrichtung fixierbar ist. Durch eine derartige Verriegelungsvorrichtung besteht die Möglichkeit, in gleicher Weise wie bei den bisher bekannten manuell abnehmbaren und einsetzbaren Kupplungen, den Kugelhals in der Arbeitsstellung betriebssicher zu fixieren.

Vorzugsweise ist dabei die Verriegelungsvorrichtung so ausgebildet, daß sie bei Erreichen der Arbeitsstellung des Kugelhalses selbsttätig in eine verriegelnde Stellung übergeht und somit den Kugelhals in der Arbeitsstellung fixiert. Damit ist sichergestellt, daß - insbesondere bei Betreiben der erfindungsgemäßen Lösung mittels eines elektrischen Antriebs - der Kugelhals bei Erreichen der Arbeitsstellung zwangsläufig in dieser Arbeitsstellung verriegelt wird.

Bei einer derartigen Verriegelungsvorrichtung ist zweckmäßigerweise vorgesehen, daß diese zum Lösen der verriegelnden Stellung einen betätigbaren Auslöser aufweist.

Der Auslöser kann auf die unterschiedlichste Art und Weise betätigbar sein. Im einfachsten Fall wäre es denkbar, einen manuellen Auslöser vorzusehen.

Besonders vorteilhaft ist es jedoch, insbesondere im Zusammenhang mit einem einen Motor aufweisenden Antrieb, wenn der Auslöser durch einen Auslöserantrieb betätigbar ist. Ein derartiger Auslöserantrieb könnte beispielsweise ein den Auslöser betätigender ansteuerbarer Elektromagnet sein.

Eine besonders zweckmäßige Lösung, insbesondere hinsichtlich der Einfachheit und Kostengünstigkeit des Aufbaus, sieht vor, daß der Auslöser von dem Antrieb zum Schwenken des Kugelhalses betätigbar ist, d. h., daß beispielsweise der Antriebsmotor, mit welchem der Kugelhals verschwenkbar ist, gleichzeitig auch dazu eingesetzt wird, den Auslöser zu betätigen.

Hinsichtlich der Fixierung des Schwenklagers am Fahrzeug sind die unterschiedlichsten Lösungen denkbar. Beispielsweise wäre es denkbar, das Schwenklager an der Stoßfängereinheit des Kraftfahrzeugs zu fixieren.

Eine besonders vorteilhaft einbaubare Lösung sieht vor, daß das Schwenklager an einem ungefähr in derselben Orientierung wie der hintere Stoßfänger quer zur Fahrzeuglängsrichtung verlaufenden Querträgerkörper gehalten ist. Ein derartiger Querträgerkörper schafft die Möglichkeit, beim Ausrüsten der Fahrzeuge eine von der Stoßfängereinheit unabhängige Fixierung zu schaffen.

Besonders vorteilhaft ist es, wenn der Querträgerkörper zwischen zwei zusätzliche Teile bildenden Seitenträgern angeordnet und mit diesen verbunden ist und wenn die Seitenträger zu fahrzeugseitigen Haltepunkten verlaufen. Somit sind zur Fixierung des Schwenklagers am Fahrzeug drei Baueinheiten vorzusehen, wobei der Querträgerkörper und die Seitenträger vormontierbar sind, so daß die gesamte Einheit aus Querträgerkörper und Seitenträger an fahrzeugseitigen Haltepunkten zu montieren ist.

Die Unterteilung der Fixierung des Schwenklagers in einen Querträgerkörper und zwei seitliche Seitenträger erlaubt es, in einfacher Weise eine Adaption an unterschiedlichste Fahrzeugtypen vorzunehmen, dergestalt, daß der Querträgerkörper, welcher das Schwenklager trägt, stets dieselbe Einheit bei unterschiedlichen Fahrzeugtypen darstellt, während die Adaption auf die unterschiedlichen Fahrzeugtypen über die Seitenträger realisierbar ist, die dann an die in den unterschiedlichen Fahrzeugtypen zur Verfügung stehenden Haltepunkte anzupassen sind.

Eine besonders günstige Anpassung an unterschiedlichste Fahrzeugtypen ist dann möglich, wenn der Querträgerkörper über eine bezogen auf eine quer zur Fahrzeuglängsrichtung verlaufende Querachse in verschiedenen Drehstellungen fixierbare Verbindung an den Seitenträgern befestigbar ist. Dies erlaubt einerseits eine feste Verbindung zwischen dem Querträgerkörper und den Seitenträgern bei der Herstellung derselben vorzusehen, andererseits einen zusätzlichen Freiheitsgrad in der Adaption der Einheit aus Querträgerkörper und Seitenträgern an einzelne Fahrzeugtypen zu haben, nämlich dadurch, daß der Querträgerkörper in unterschiedlichen Drehstellungen relativ zu den Seitenträgern montierbar ist.

Besonders zweckmäßig ist es, wenn die Verbindung zwischen dem Querträgerkörper und den Seitenträgern zwei ineinandergreifende und nur um die Querachse gegeneinander verdrehbare Verbindungselemente aufweist. Hiermit ist eine formschlüssige und insbesondere für große Kräfte geeignete Verbindung geschaffen, die lediglich den einen Freiheitsgrad aufweist, nämlich die Möglichkeit einer verdrehbaren Fixierung des Querträgerkörpers relativ zu den Seitenträgern.

Eine aufgrund ihrer Einfachheit und Stabilität besonders bevorzugte Verbindung sieht vor, daß diese in Richtung der Querachse unter Bildung einer Steckverbindung ineinandersteckbare Verbindungselemente aufweist.

Diese Verbindungselemente erlauben somit aufgrund der Steckverbindung eine formschlüssige Verbindung mit lediglich einem hinsichtlich der Drehung möglichen Freiheitsgrad, wobei in den verschiedenen Drehstellungen dann eine Festlegung der Drehstellung zwischen dem Querträgerkörper und den Seitenträgern erfolgt.

Vorzugsweise sind die Verbindungselemente dabei so ausgebildet, daß sie die quer zur Querachse wirkenden Kräfte durch die formschlüssige Steckverbindung übertragen.

Hinsichtlich der Position des Kugelhalses und der Kupplungskugel in der Ruhestellung relativ zum Querträgerkörper wurden bislang keine näheren Angaben gemacht. So ist prinzipiell die relative Lage von Kugelhals und Querträgerkörper zueinander ohne große Relevanz für die erfindungsgemäße Lösung, da der Querträgerkörper beliebige Formen aufweisen kann.

Eine insbesondere hinsichtlich des erforderlichen Bauraums besonders günstige Lösung sieht jedoch vor, daß der Kugelhals in der Ruhestellung sich zumindest abschnittsweise längs des Querträgerkörpers erstreckt.

Besonders günstig hinsichtlich des Bauraums ist es, wenn der Kugelhals in der Ruhestellung in ungefähr gleichbleibendem Abstand von einer diesem zugewandten Seite des Querträgerkörpers verläuft.

Eine besonders geeignete Stellung sieht vor, daß der Kugelhals mit der Kupplungskugel in der Ruhestellung so liegt, daß eine Verbindungslinie zwischen Lagerelement und Kupplungskugel ungefähr längs des Querträgerkörpers in Fahrzeugquerrichtung verläuft.

Um bei Ausbildung der Seitenträger keinen Beschränkungen hinsichtlich der Form derselben zu unterliegen, ist vorteilhafterweise vorgesehen, daß der Kugelhals und die Kupplungskugel in Ruhestellung zwischen den Enden des Querträgerkörpers liegen.

Im Zusammenhang mit der bisherigen Erläuterung der einzelnen Ausführungsbeispiele wurde lediglich davon ausgegangen, daß das Schwenklager an dem Querträgerkörper gehalten ist. Besonders vorteilhaft ist es jedoch auch, wenn an dem Querträgerkörper der Antrieb für das Schwenken des Kugelhalses gehalten ist, da somit der Querträgerkörper in einfacher Weise eine Basis für die beiden zusammenwirkenden Teile bildet.

Darüber hinaus ist vorteilhafterweise vorgesehen, daß an dem Querträgerkörper die Anschläge für die Begrenzung der Schwenkbewegung des Kugelhalses in der Arbeitsstellung und/oder der Ruhestellung gehalten sind, so daß auch diese auf derselben Basis angeordnet sind wie das Schwenklager und gegebenenfalls der Antrieb.

Auch bei Vorsehen einer Verriegelungsvorrichtung für den in Arbeitsstellung stehenden Kugelhals ist vorteilhafterweise vorgesehen, daß an dem Querträgerkörper die Verriegelungsvorrichtung angeordnet ist.

Hinsichtlich der relativen Anordnung von Antrieb und Ruhestellung des Kugelhalses mit Kupplungskugel am Querträgerkörper wurden im Zusammenhang mit der bisherigen Erläuterung der einzelnen Ausführungsbeispiele keine näheren Angaben gemacht.

So sieht ein vorteilhaftes Ausführungsbeispiel vor, daß der Antrieb für die Schwenkbewegung auf einer der Ruhestellung von Kugelhals und Kupplungskugel gegenüberliegenden Seite des Schwenklagers angeordnet ist, so daß sich ein äußerst kompakter Aufbau der erfindungsgemäßen Anhängekupplung ergibt, welcher beim Einbau in ein Fahrzeug einen möglichst kleinen Bauraum hinter dem Stoßfänger benötigt.

Ein hinsichtlich der Montage besonders vorteilhaftes Ausführungsbeispiel sieht vor, daß der Querträgerkörper ein Formteil ist, an welches das Schwenklager angeformt ist.

Darüber hinaus sieht ein vorteilhaftes Ausführungsbeispiel vor, daß der Querträgerkörper ein Formteil ist und eine Aufnahme für den Antrieb aufweist, so daß es nicht notwendig ist, zusätzliche Halteelemente für die Verbindung von Querträgerkörper und Antrieb vorzusehen.

Darüber hinaus ist vorteilhafterweise vorgesehen, daß der Querträger ein Formteil ist, welches eine Aufnahme für das selbsthemmende Getriebe aufweist, so daß sich das selbsthemmende Getriebe, welches gegebenenfalls große Kräfte aufzunehmen hat, an dem Querträgerkörper mit der ausreichenden Stabilität und möglichst einfach montieren läßt.

Besonders vorteilhaft ist es, wenn der Querträgerkörper ein Formteil ist, an welches ein Anschlag angeformt ist, der ebenfalls zur Aufnahme großer Kräfte ausgelegt sein muß und somit besonders günstig bereits durch das Formteil realisiert wird.

Darüber hinaus ist es vorteilhaft, wenn der Querträgerkörper ein Formteil ist, welches eine Aufnahme für die Verriegelungsvorrichtung aufweist.

Der Querträgerkörper ist als Formteil in unterschiedlichen Arten herstellbar. Beispielsweise ist es denkbar, als Querträgerkörper ein geschweißtes, gebogenes oder geschmiedetes Stahlteil zu verwenden.

Alternativ dazu ist es vorteilhafterweise möglich, als Formteil ein Gußteil zu verwenden, wobei dieses Formteil ein Stahlgußteil oder ein Leichtmetallgußteil, insbesondere ein Aluminiumgußteil, sein kann.

Weitere Merkmale und Vorteile der Erfindung sind Gegenstand der nachfolgenden Beschreibung sowie der zeichnerischen Darstellung einiger Ausführungsbeispiele.

In der Zeichnung zeigen:
- Fig. 1: eine Draufsicht auf ein Fahrzeug mit einer erfindungsgemäßen Anhängekupplung von hinten mit teilweise weggebrochener Stoßfängereinheit, wobei die Bildebene eine vertikale, senkrecht zur Fahrzeuglängsrichtung verlaufende Querebene darstellt;
- Fig. 2: einen Schnitt durch einen hinteren Teil des Fahrzeugs im Bereich der erfindungsgemäßen Kupplung längs Linie 2-2 in Fig. 1, wobei die Bildebene eine zu der Fahrzeuglängsrichtung parallel verlaufende vertikale Längsebene ist;
- Fig. 3: eine Draufsicht auf die erfindungsgemäße Kupplung in Richtung des Pfeils A in Fig. 1, wobei die Bildebene eine horizontale Ebene ist;
- Fig. 4: eine Draufsicht ähnlich Fig. 3 einer Variante der erfindungsgemäßen Lösung;
- Fig. 5: einen Schnitt längs Linie 5-5 in Fig. 1;
- Fig. 6: eine Draufsicht ähnlich Fig. 3 einer zweiten Variante einer erfindungsgemäßen Anhängekupplung;
- Fig. 7: eine Ansicht ähnlich Fig. 1 der in Fig. 6 dargestellten Variante;
- Fig. 8: eine ausschnittsweise Explosionsdarstellung einer Verbindung zwischen Querträgerkörper und Seitenträger im Bereich B in Fig. 7;
- Fig. 9: eine Variante des in Fig. 6 und 7 dargestellten Ausführungsbeispiels;
- Fig. 10: eine schematische Darstellung einer erfindungsgemäßen Steuerung.

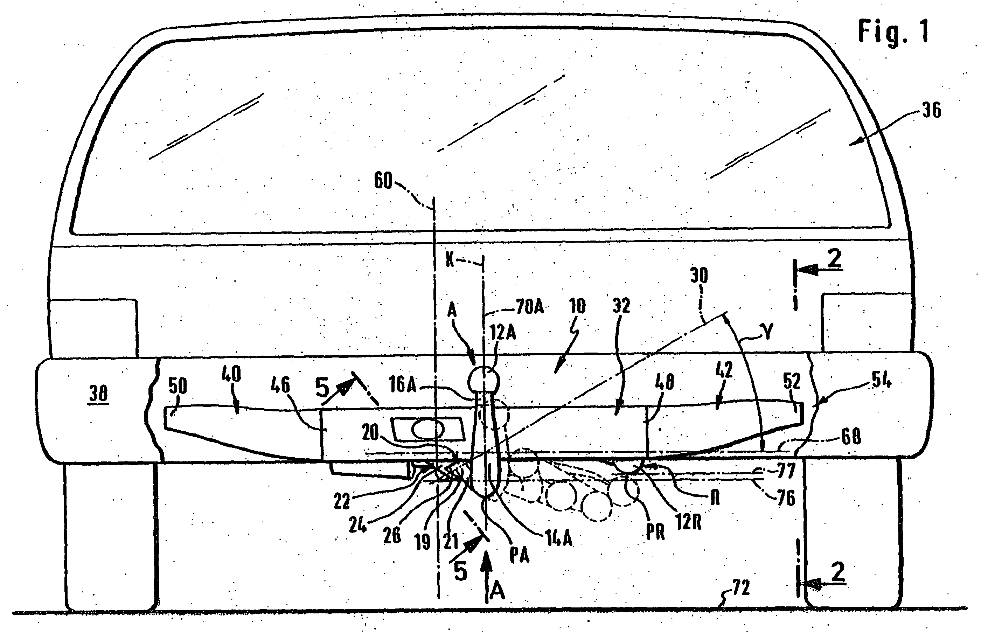

Ein in Fig. 1 bis 3 dargestelltes, als Ganzes mit 10 bezeichnetes Ausführungsbeispiel einer erfindungsgemäßen Anhängekupplung umfaßt eine Kupplungskugel 12, welche von einem Kugelhals 14 getragen ist, wobei der Kugelhals 14 einen abgekröpften Endbereich 16 aufweist, auf welchem die Kupplungskugel 12 unmittelbar sitzt und diesem abgekröpften Endbereich 16 gegenüberliegend einen unteren Endbereich 18 aufweist, welcher mit einem Lagerelement 20 verbunden ist, wobei dieses Lagerelement 20 in einem Schwenklager 22, beispielsweise umfassend einen Lagerkörper 24 mit zwei Lagerflanschen 26 und 28, um eine Schwenkachse 30 verschwenkbar ist.

Das Lagerelement 20 umfaßt vorzugsweise einen im Schwenklager 22, beispielsweise zwischen den Lagerflanschen 26 und 28 liegenden Schwenkkörper 19 und einen sich vom Schwenkkörper 19 zum Endbereich 18 des Kugelhalses 14 erstreckenden Arm 21, wobei der Arm in einer Arbeitsstellung A des Kugelhalses 14A schräg zur Krümmungsebene K des Kugelhalses 14 verläuft, und zwar in einer einer Ruhestellung R des Kugelhalses entgegengesetzten Richtung, so daß das Schwenklager 22 und der Schwenkkörper 19 im wesentlichen seitlich der Krümmungsebene K liegt.

Das Schwenklager 22 ist seinerseits an einem als Ganzes mit 32 bezeichneten Querträgerkörper gehalten, der sich quer zu einer Fahrzeuglängsrichtung 34 eines als Ganzes mit 36 bezeichneten Kraftfahrzeugs und längs einer hinteren Stoßfängereinheit 38 desselben erstreckt.

Der Querträgerkörper 32 sitzt dabei vorzugsweise zwischen zwei Seitenträgern 40 und 42, welche sich an in einer senkrecht zur Fahrzeuglängsrichtung 34 verlaufenden Fahrzeugquerrichtung 44 einander gegenüberliegenden Enden 46 und 48 des Querträgerkörpers 32 anschließen und sich bis zu seitlichen Befestigungsbereichen 50, 52 an einer Fahrzeugkarosserie 54 erstrecken.

In den Befestigungsbereichen 50 und 52 erfolgt die Verbindung der erfindungsgemäßen Anhängekupplung mit der Fahrzeugkarosserie 54.

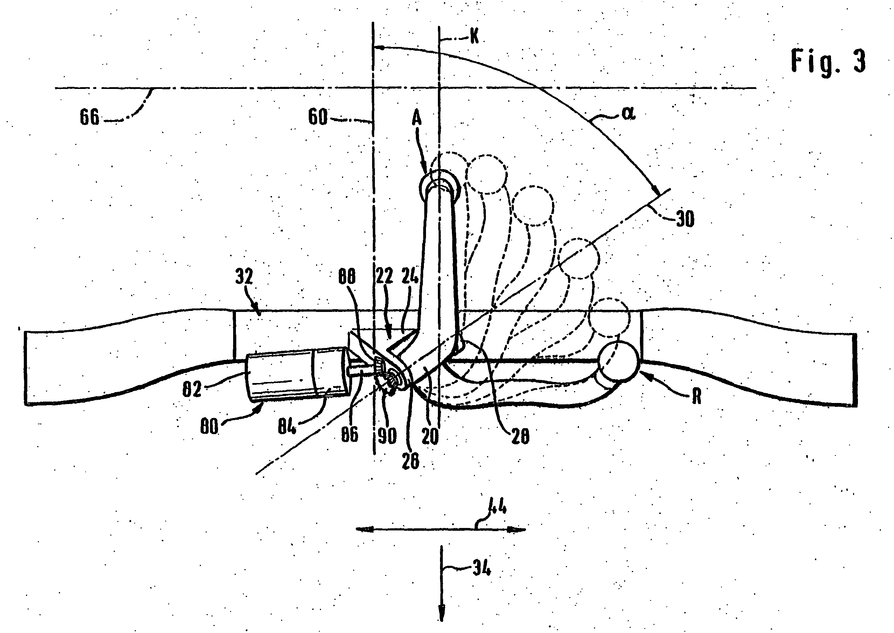

Die Schwenkachse 30 verläuft schräg zu einer parallel zur Fahrzeuglängsrichtung 34 verlaufenden vertikalen Längsebene 60, wobei die Projektion der Schwenkachse 30 in eine horizontale Ebene 62 mit der Längsebene 60 oder der Fahrzeuglängsrichtung 34 einen Winkel α einschließt, welcher beispielsweise in einem Winkelbereich von ungefähr 50° bis ungefähr 60° liegt, vorzugsweise ungefähr 55° beträgt (Fig. 3).

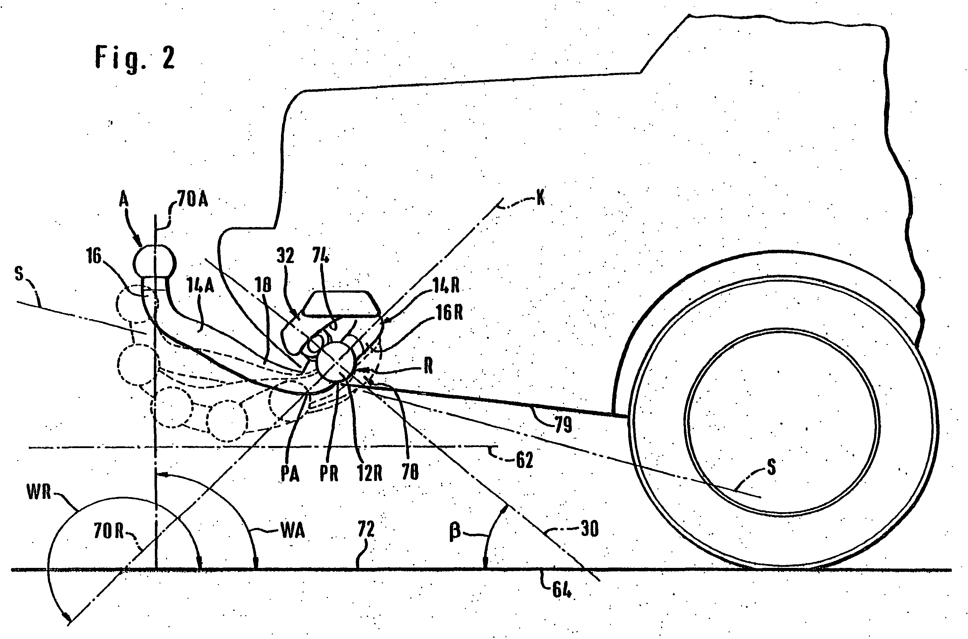

Darüber hinaus schließt die Projektion der Schwenkachse 30 in die Längsebene 60 - wie in Fig. 2 dargestellt - mit einer in der Längsebene 60 verlaufenden Horizontalen 64 einen Winkel β welcher beispielsweise in einem Winkelbereich von ungefähr 35° bis ungefähr 45° liegt, vorzugsweise ungefähr 40° beträgt.

Ferner schließt die Projektion der Schwenkachse 30 in eine parallel zur Fahrzeugquerrichtung 44 und senkrecht zur Längsebene 60 stehende vertikale Querebene 66 - wie in Fig. 1 dargestellt - mit einer in dieser verlaufenden Horizontalen 68 einen Winkel γ welcher beispielsweise in einem Winkelbereich von ungefähr 25° bis ungefähr 35° liegt, vorzugsweise ungefähr 30° beträgt.

Der Kugelhals 14 ist um die Schwenkachse 30 von einer Arbeitsstellung A, in welcher eine Kupplungskugelmittelachse 70 ungefähr senkrecht auf der horizontalen Ebene 62 steht und der Kugelhals 14, wie in Fig. 1 und 3 dargestellt, in einer zur Längsebene 60 parallelen und durch die Kupplungskugelmittelachse 70 hindurch verlaufende Krümmungsebene K gekrümmt bis zum Lagerelement 20 verläuft, in die Ruhestellung R schwenkbar.

In der Ruhestellung R verläuft die Kupplungskugelmittelachse 70R schräg zur horizontalen Ebene 62, wobei sich ausgehend von der in Ruhestellung stehenden Kupplungskugel 12R der sich an diesen anschließende gekröpfte Endbereich 16R des Kugelhalses 14R von einer einer Fahrbahnoberfläche 72 abgewandten Seite der Kupplungskugel 12R ausgehend erstreckt.

D. h. mit anderen Worten, daß die Kupplungskugel 12A in der Arbeitsstellung A von der Fahrbahnoberfläche 72 weg nach oben weist und sich der Kugelhals 14 ausgehend von der Kupplungskugel 12A in Richtung der Fahrbahnoberfläche 72 nach unten erstreckt, während in der Ruhestellung R die Kupplungskugel 12R zur Fahrbahnoberfläche 72 hinweist, während sich der Kugelhals 14R ausgehend von der Kupplungskugel 12R nach oben, d. h. von der Fahrbahnoberfläche 72 weg in einem Bogen bis zum Schwenklager 22 erstreckt.

Insbesondere erstreckt sich in der Ruhestellung R der Kugelhals 14R längs des Querträgerkörpers 32, vorzugsweise möglichst nahe an einer der Fahrbahnoberfläche 72 zugewandten Unterseite 74 desselben, um einen möglichst kleinen Ruhestellungsraum 78 zur Aufnahme des Kugelhalses 14R der Kupplungskugel 12R in der Ruhestellung R zu erhalten.

Ferner ist in der Ruhestellung R der Kugelhals 14R mit der Kupplungskugel 12R im wesentlichen oberhalb einer die Bodengruppe der Karosserie oder die Stoßfängereinheit 38 berührenden, in der Längsebene 60 verlaufenden und 15° gegenüber der Fahrbahnoberfläche 72 geneigten Sichtlinie S angeordnet, um den Kugelhals 14R mit der Kupplungskugel 12R im wesentlichen für eine außenstehende Person unsichtbar zu positionieren.

Zur Veranschaulichung der Schwenkbewegung des Kugelhalses 14 mit der Kupplungskugel 12 von der Arbeitsstellung A in die Ruhestellung R sind in den Figuren 1 bis 3 die Arbeitsstellung A und die Ruhestellung R derselben durchgezogen gezeichnet, während Zwischenstellungen zwischen beiden gestrichelt angedeutet sind.

Dabei ist zu erkennen, daß aufgrund der Schräglage der Schwenkachse 30 der sich zunächst in der Arbeitsstellung A parallel zur Längsebene 60 mit seiner Krümmungsebene K erstreckende Kugelhals 14 in eine Stellung übergeht, in welcher sich dessen Krümmungsebene K schräg und/oder quer zur Längsebene 60 erstreckt.

Die Bewegung des Kugelhalses 14 mit der Kupplungskugel 12 und insbesondere die Verschwenkung derselben lassen sich - wie in Fig. 2 dargestellt - besonders einfach durch die Darstellung der Projektion der Kupplungskugelmittelachse 70 auf die vertikale Längsebene 60 oder eine zu dieser parallelen Ebene beschrieben. In der Arbeitsstellung A weist die Projektion der Kupplungskugelmittelachse 70A in die Längsebene 60 einen Winkel WA mit der Horizontalen 64 von ungefähr 90° auf. Die Kupplungskugelmittelachse 70 wird während des Verschwenkens des Kugelhalses 14 mit der Kupplungskugel 12 von der Arbeitsstellung A in die Ruhestellung R so weit verschwenkt, daß die Projektion der Kupplungskugelmittelachse 70 in der Längsebene 60 eine Drehung erfährt, und zwar so weit, daß die Projektion der Kupplungskugelmittelachse 70R in Ruhestellung in der Längsebene 60 mit der Horizontalen 64 einen Winkel WR einschließt, welcher größer als 180° ist. Der Winkel beträgt vorzugsweise mehr als 225°.

Um insbesondere den Kugelhals 14R und die Kupplungskugel 12R in der Ruhestellung R möglichst für einen Betrachter des Kraftfahrzeugs 36 unsichtbar werden zu lassen, liegt in der Ruhestellung R die Kupplungskugel 12R auf einer der Fahrbahnoberfläche 72 abgewandten Seite einer horizontalen Ebene 76, deren Höhe über der Fahrbahnoberfläche 72 durch eine Unterkante des Schwenklagers 22 definiert ist, oder berührt diese horizontale Ebene 76, so daß ein tiefster Punkt PR vom Kugelhals 14R und Kupplungskugel 12R in Ruhestellung - in diesem Fall der tiefste Punkt PR der Kupplungskugel 12R in einer horizontalen Ebene 77 - höher liegt als die horizontale Ebene 76 (Fig. 1) und höher als ein tiefster Punkt PA des Kugelhalses 12A in Arbeitsstellung A.

Vorzugsweise liegen der Kugelhals 14R und die Kupplungskugel 12R in der Ruhestellung R in einem Ruhestellungsraum 78, welcher zwischen der hinteren Stoßfängereinheit 38 und der Fahrzeugkarosserie 54 liegt und sich längs der Stoßfängereinheit 38 in der Fahrzeugquerrichtung 44 erstreckt.

Zweckmäßigerweise liegt der Ruhestellungsraum 78 oberhalb einer durch eine Bodengruppe der Fahrzeugkarosserie 54 und der Stoßfängereinheit 38 definierten bodenseitigen Fläche 79 des Kraftzeugs 36 (Fig. 2).

Zum Antreiben der Schwenkbewegung des Kugelhalses 14 mit der Kupplungskugel 12 um die Schwenkachse 30 ist ein als Ganzes mit 80 bezeichneter Antrieb vorgesehen, welcher einen elektrischen Motor 82 sowie beispielsweise ein selbsthemmendes oder selbstsperrendes Getriebe 84 umfaßt. Auf einer Abtriebswelle 86 des Getriebes 84 sitzt ein Kegelrad 88, mit welchem ein Kegelrad 90 antreibbar ist, welches drehfest mit dem Lagerelement 20 verbunden ist und vorzugsweise auf einer der Fahrbahnoberfläche 72 zugewandten Seite des Lagerelements 20 sitzt.

Das selbstsperrende Getriebe 84 ist so ausgebildet, daß es gegenüber äußeren, auf die Abtriebswelle 86 wirkenden Drehmomenten blockiert und nur über den Motor 82 antreibbar ist. Beispielsweise ist das selbstsperrende Getriebe 84 als Schneckengetriebe ausgebildet.

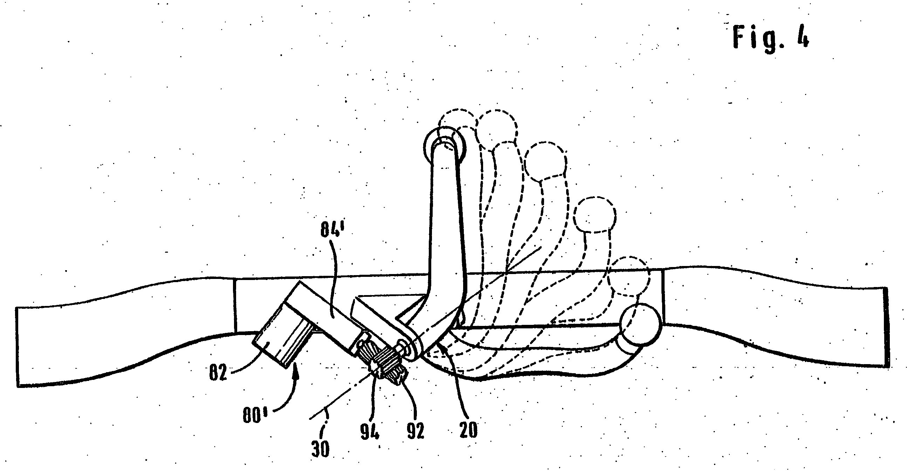

Bei einer Variante des ersten Ausführungsbeispiels, dargestellt in Fig. 4, umfaßt der Antrieb 80' ebenfalls den Elektromotor 82 und ein mit diesem verbundenes Getriebe 84', welches nicht notwendigerweise als selbstsperrendes Getriebe ausgebildet sein muß, sondern beispielsweise ein Winkelgetriebe darstellt. Das Getriebe 84' treibt seinerseits ein auf seiner Abtriebswelle sitzendes Schneckenrad 92, welches wiederum ein drehfest mit dem Lagerelement 20 verbundenes und mit dem Schneckenrad 92 in Eingriff stehendes Zahnrad 94 antreibt, die zusammen ein selbsthemmendes Getriebe bilden.

Vorzugsweise ist der Antrieb 80 auf einer der Ruhestellung R des Kugelhalses 14R gegenüberliegenden Seite des Schwenklagers 22 angeordnet und an dem Querträgerkörper 32 fixiert.

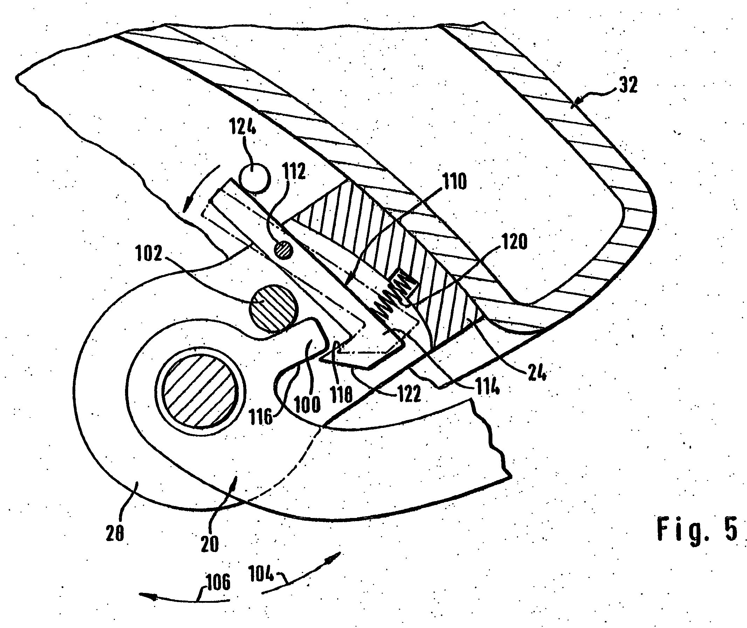

Zur genauen Festlegung der Arbeitsstellung A ist, wie in Fig. 5 dargestellt, das Lagerelement 20 beispielsweise mit einem nasenähnlichen Vorsprung 100 versehen, welcher in der Arbeitsstellung an einem fest mit dem Querträgerkörper 32 verbundenen Anschlag 102 anliegt, wobei der Anschlag 102 beispielsweise als ein sich zwischen den Lagerflanschen 26 und 28 erstreckender Bolzen ausgebildet ist.

Bei einer Einschwenkbewegung in Richtung 104 in die Arbeitsstellung A kommt dabei der Vorsprung 100 an dem Anschlag 102 zur Anlage.

Erfolgt bei der erfindungsgemäßen Lösung der Antrieb über das selbsthemmende Getriebe 84 oder das Schneckenrad 92 mit dem Zahnrad 94, welches ebenfalls als selbsthemmendes Getriebe wirkt, so wäre es prinzipiell nicht notwendig, bei Anlegen des Vorsprungs 100 an dem Anschlag 102 eine zusätzliche Sicherung vorzusehen, da das selbsthemmende Getriebe 84 bzw. 92, 94 einer Ausschwenkbewegung in Richtung des Pfeils 106 aus der Arbeitsstellung A heraus entgegenwirkt und diese nicht zuläßt.

Zur Sicherung des Kugelhalses 14A in der Arbeitsstellung A ohne Vorhandensein eines selbsthemmenden Getriebes oder zur zusätzlichen Sicherheit bei Vorhandensein eines selbsthemmenden Getriebes ist eine Verriegelungsvorrichtung 110 vorgesehen, welche beispielsweise eine schwenkbar um eine Achse 112 gelagerte Verriegelungsklinke 114 aufweist, welche in ihrer den Kugelhals 14A in Arbeitsstellung A verriegelnden Stellung, dargestellt in Fig. 5 mit durchgezogenen Linien, den Vorsprung 100 auf einer dem Anschlag 102 gegenüberliegenden Seite 116 hintergreift und mit einer Verriegelungsfläche 118 gegen eine Bewegung in Ausschwenkrichtung 106 fixiert, so daß der Vorsprung 100 zwischen der Verriegelungsfläche 118 und dem Anschlag 102 gegen ein Verschwenken gesichert ist.

Um die Verriegelungsklinke 114 in ihrer verriegelnden Stellung zu halten, ist beispielsweise eine Feder 120 vorgesehen, welche die Verriegelungsklinke 114 in Richtung ihrer verriegelnden Stellung beaufschlagt und sich beispielsweise an dem Lagerkörper 24 abstützt.

Um zu ermöglichen, daß der Vorsprung 100 bei Bewegung des Lagerelements 20 in Einschwenkrichtung 104 in die Stellung zwischen dem Anschlag 102 und der Verriegelungsfläche 118 einschwenken kann, ist die Verriegelungsklinke 114 noch mit einer Einlaufschräge 122 versehen, welche in einem spitzen Winkel gegenüber der Verriegelungsfläche 118 verläuft und dem sich in Einschwenkrichtung 104 nähernden Vorsprung 100 zugewandt ist, so daß der sich in Einschwenkrichtung 104 bewegende und gegen die Einlaufschräge 122 wirkende Vorsprung 100 die Verriegelungsklinke 114 aus ihrer verriegelnden Stellung gegen die Wirkung der Feder 120 herausbewegt und somit die Möglichkeit hat, über die Einlaufschräge 122 hinweg sich in seine Arbeitsstellung A zu bewegen, in welcher er an dem Anschlag 102 anliegt. In dieser Arbeitsstellung A des Vorsprungs 100 bewegt sich die Verriegelungsklinke 114 wieder in Richtung ihrer verriegelnden Stellung, wobei die Verriegelungsfläche 118 die Seite 116 des Vorsprungs 100 hintergreift und diesen fixiert.

Um den Vorsprung 100 aus seiner in Arbeitsstellung A verriegelten Stellung herausbewegen zu können, ist eine Betätigung der Verriegelungsklinke 114 erforderlich, die diese in ihre gestrichelt in Fig. 5 angedeutete entriegelnde Stellung bewegt. Im einfachsten Fall erfolgt die Betätigung der Verriegelungsklinke 114 manuell.

Diese Betätigung der Verriegelungsklinke 114 erfolgt bei Vorhandensein eines motorischen Antriebs 80, 80' vorzugsweise über einen von dem Antrieb 80 oder 80' bewegbaren Nocken 124, wobei der Nocken 124 beispielsweise durch ein reibschlüssig angetriebenes Element erfolgt, welches beim Loslaufen des Antriebs den Nocken 124 gegenüber dem Lagerelement 20 vorauseilend antreibt, so daß die Verriegelungsklinke 114 bereits in ihrer in Fig. 5 gestrichelt angedeuteten entriegelnden Stellung steht, bevor der Vorsprung 100 sich von dem Anschlag 102 in Ausschwenkrichtung 106 wegbewegt. Ein derartiges Vorauseilen des Antriebs des Nockens 124 ist beispielsweise durch ein Spiel zwischen dem über Reibschluß angetriebenen und den Nocken 124 bewegenden Element und dem Antrieb des Lagerelements 20, beispielsweise über das Kegelrad 90 oder das Zahnrad 94, realisierbar.

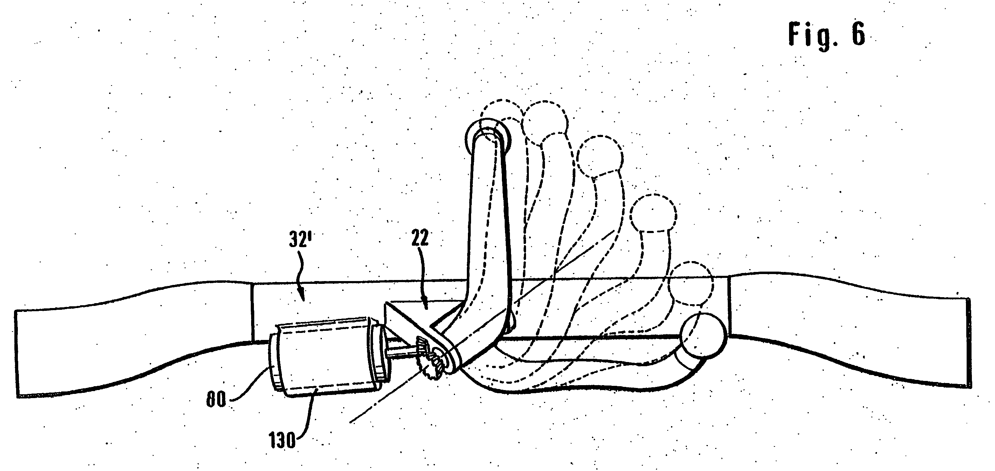

Bei einer bevorzugten Variante einer erfindungsgemäßen Lösung ist, wie in Fig. 6 dargestellt, der Querträgerkörper 32' als Formteil, beispielsweise als Gußteil, ausgebildet, an welches sowohl das gesamte Schwenklager 22 mit allen Einzelheiten als auch eine Aufnahme 130 für den Antrieb 80 sowie eine Aufnahme für die Verriegelungsvorrichtung 110 einstückig angeformt sind, so daß eine Montage des gesamten Antriebs 80 in einfacher Art und Weise möglich ist.

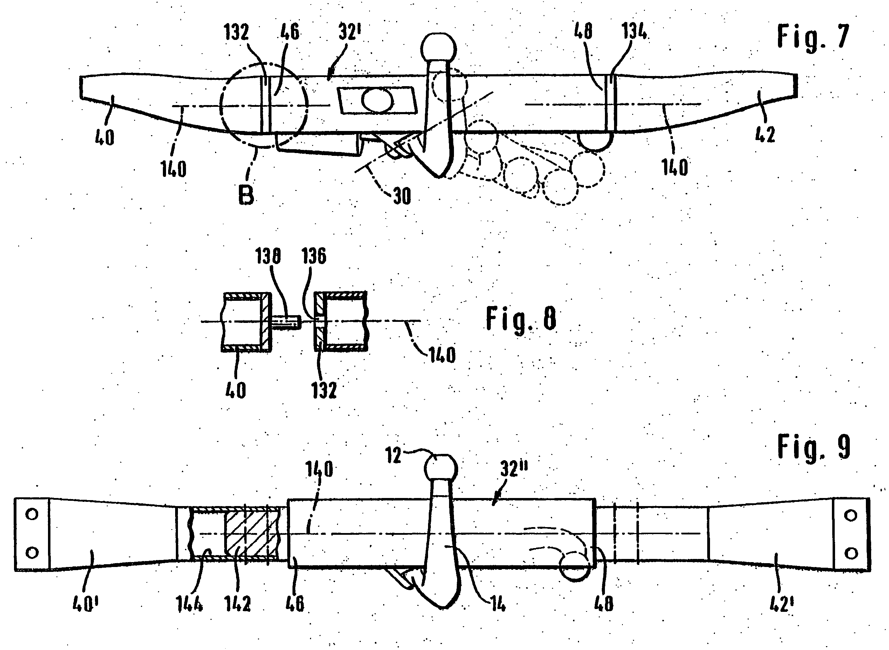

Bei dieser Variante ist, wie beispielsweise in Fig. 7 dargestellt, der Querträgerkörper 32' im Bereich seiner beiden Enden 46 und 48 mit Montageflanschen 132 und 134 versehen, wobei jeder der Montageflansche 132, 134, wie in Fig. 8 dargestellt, einen Durchbruch 136 aufweist, in welchen der jeweilige Seitenträger 40, 42 mit einem Zapfen 138 formschlüssig, jedoch um eine Achse 140 drehbar, eingreift.

Sind die beiden Zapfen 138 der beiden Seitenträger 40, 42 koaxial zueinander angeordnet, so ist insgesamt der Querträgerkörper 32' gegenüber den Seitenträgern 40 und 42 um die Achse 140, welche quer zur Fahrzeuglängsrichtung 34 verläuft, verschwenkbar, im übrigen mit den Seitenträgern 40 und 42 jedoch fest verbunden, so daß die Zugbelastungen im wesentlichen durch die Zapfen 138 auf die Montageflansche 132, 134 übertragbar sind. Die drehfeste Fixierung der Montageflansche 132 an den Seitenträgern 40 und 42 kann über jegliche Art von zusätzlicher Verbindung, wie beispielsweise ein zusätzliches Durchschrauben oder Schweißen oder Nieten erfolgen.

Bei einer weiteren Variante der erfindungsgemäßen Lösung, dargestellt in Fig. 9, ist der ebenfalls als Formteil gestaltete Querträgerkörper 32" im Bereich seiner Enden 46, 48 mit zylindrische Außenflächen aufweisenden Fortsätzen 142 versehen, welche in innenzylindrische Aufnahmen 144 der Seitenträger 40' und 42' eingreifen. Damit ist der Querträgerkörper 32" ebenfalls um die Achse 140 kippbar, im übrigen aber formschlüssig mit dieser verbunden.

Eine zusätzliche drehfeste Fixierung des Querträgerkörpers 32" an den Seitenträgern 40', 42' erfolgt ebenfalls entweder über Schrauben, Schweißen oder Nieten.

Mit den Lösungen gemäß Fig. 7 und 8 oder Fig. 9, welche beide eine in verschiedenen Kippstellungen mögliche Montage des Querträgerkörpers 32' oder 32" relativ zu den Seitenträgern 40, 42 oder 40', 42' erlauben, besteht die Möglichkeit, einen einzigen Querträgerkörper 32' oder 32" für eine Vielzahl von Fahrzeugtypen herzustellen und die Adaption an den jeweiligen Fahrzeugtyp - wenn erforderlich - über die Form der Seitenträger 40, 42 oder 40', 42' zu realisieren und gleichzeitig noch eine Anpassung an den jeweiligen Fahrzeugtyp durch eine Verdrehung des Querträgerkörpers 32 oder 32' gegenüber den jeweiligen Seitenträgern 40, 42 oder 40', 42' durch Montage in unterschiedlichen, um die Achse 140 gekippten Stellungen zu variieren.

In allen Ausführungsbeispielen trägt der Querträgerkörper 32 oder 32' oder 32" den gegebenenfalls vorhandenen Antrieb 80 oder 80' und über das Schwenklager 22 den Kugelhals 14 mit der Kupplungskugel 12 sowohl in Arbeitsstellung als auch in Ruhestellung und erstreckt sich vorzugsweise in der Fahrzeugquerrichtung 44 so weit, daß der Antrieb 80 oder 80' sowie der Kugelhals 14R und die Kupplungskugel 12R in der Ruhestellung R innerhalb der Enden 46 und 48 liegen.

Somit sind an dem Querträgerkörper 32 oder 32' oder 32" sämtliche für die Funktion der erfindungsgemäßen Schwenkbarkeit des Kugelhalses 14 erforderlichen Elemente angeordnet und keinerlei funktionsrelevante Elemente sind in den Seitenträgern 40, 42 oder 40', 42' vorgesehen, so daß diese Seitenträger 40, 42 bzw. 40', 42' lediglich zur Adaption an den jeweiligen Fahrzeugtyp zu variieren sind.

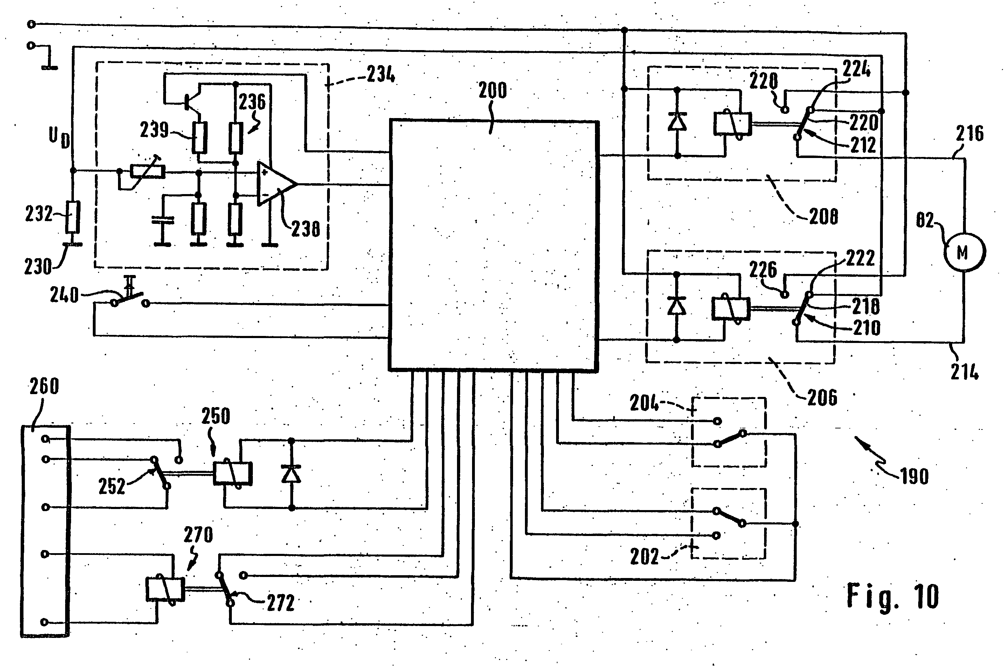

Zum Betreiben der erfindungsgemäßen Lösung ist eine in Fig. 10 dargestellte Steuerung 190 vorgesehen, welche als zentrales Element eine Steuerlogik 200 umfaßt. Diese Steuerlogik 200 wird beispielsweise durch einen Prozessor oder eine fest programmierte Logikschaltung realisiert.

Mit der Steuerlogik 200 ist ein Sensor 202, beispielsweise in Form eines Endschalters, verbunden, welche die Arbeitsstellung A des Kugelhalses 14 und der Kupplungskugel 12 detektiert.

Beispielsweise besteht die Möglichkeit, den Endschalter so anzuordnen, daß er dann betätigt ist, wenn das Lagerelement 20 die Arbeitsstellung A erreicht hat.

Insbesondere wäre es möglich, den Endschalter 202 über den Vorsprung 100 zu betätigen.

Noch vorteilhafter ist es jedoch, wenn der Endschalter 202 nicht nur die Arbeitsstellung A des Lagerelements 20 erfaßt, sondern auch erfaßt, ob die Verriegelungsvorrichtung 110 das Lagerelement 20 in der Arbeitsstellung A zusätzlich verriegelt. Dies ist dadurch realisierbar, daß die Anwesenheit des Lagerelements 20 in der Arbeitsstellung und die verriegelnde Stellung der Verriegelungsvorrichtung 110, d. h. in diesem Fall der Verriegelungsklinke 114, so verknüpft werden, daß sie nur dann den Endschalter 202 betätigen, wenn beide Bedingungen erfüllt sind. ;

Alternativ dazu ist es denkbar, zwei Sensoren 202 vorzusehen, wobei einer der Sensoren 202 die Anwesenheit des Lagerelements 20 in der Arbeitsstellung A und der andere die verriegelnde Stellung der Verriegelungsvorrichtung 110, insbesondere der Verriegelungsklinke 114, detektiert.

Ferner ist die Steuerlogik 200 mit einem zweiten Sensor 204 verbunden, welcher dazu dient, zu erfassen, wann der Kugelhals 14 und die Kupplungskugel 12 die Ruhestellung R erreicht haben. Auch dieser Sensor 204 ist beispielsweise als Endschalter ausführbar und bei in Ruhestellung stehendem Kugelhals 14R, beispielsweise unmittelbar durch diesen, betätigbar.

Die Steuerlogik 200 steuert ferner ein erstes Motorrelais 206 und ein zweites Motorrelais 208, welche Umschaltkontakte 210 bzw. 212 aufweisen, wobei die Umschaltkontakte 210 und 212 jeweils eine mit Anschlußleitungen 214 und 216 des Elektromotors 82 verbundene Kontaktzunge 218 bzw. 220 aufweisen.

In der Ruhestellung liegt die Kontaktzunge 218 bzw. 220 jeweils an einem Massekontakt 222 bzw. 224 und in der Schaltstellung an einem auf Speisespannung 226 bzw. 228 liegenden Kontakt. Je nach dem, welches der Schaltrelais 206 oder 208 durch die Steuerlogik 200 angesteuert wird, wird der Elektromotor 82 entweder im Rechtslauf oder im Linkslauf betrieben.

In der mit den Massekontakten 222 und 224 der Schaltrelais 206 bzw. 208 verbundenen Masseleitung ist ein vor dem Masseanschluß 230 liegender Widerstand 232 vorgesehen, an welchem eine dem durch den Motor 82 fließenden Strom proportionale Spannung UD abfällt. Diese Spannung UD stellt aufgrund der Abhängigkeit des durch den Motor 82 fließenden Stroms von dessen Gegendrehmoment ein Maß für das an dem Motor 82 wirkende Gegendrehmoment dar. Die Spannung UD wird über eine als Schwellwertschaltung arbeitende Drehmomenterkennungsschaltung 234 an einem Eingang eines Operationsverstärkers 238 erfaßt und wenn sie einen dieser Schwellwertschaltung vorgegebenen Schwellwert übersteigt, gibt der Operationsverstärker 238 der Drehmomenterkennungsschaltung 234 an die Steuerlogik 200 ein Signal.

Vorzugsweise sind der Drehmomenterkennungsschaltung 234 über die Steuerlogik 200 unterschiedliche Schwellwerte vorgebbar. Die Steuerlogik 200 gibt beispielsweise dann, wenn der Kugelhals 14 sich aus der Arbeitsstellung oder der Ruhestellung herausbewegen soll, der Schwellwerterkennungsschaltung 234 durch Parallelschalten eines Widerstands 239 am Spannungsteiler 236 einen höheren Schwellwert vor, um ein hohes Losbrechmoment des Elektromotors 82 beim Herausbewegen des Kugelhalses 14 aus der Arbeitsstellung A oder der Ruhestellung R zur Verfügung zu haben. Dieser erhöhte Schwellwert läßt sich durch die Sensoren 202 oder 204 auslösen. Nachdem der Kugelhals 14 die Arbeitsstellung A oder die Ruhestellung R, detektiert durch die Sensoren 202 bzw. 204, verlassen hat, arbeitet die Schwellwerterkennungsschaltung 234 mit einem herabgesetzten Schwellwert, so daß ein gegenüber dem Losbrechmoment niedrigeres Gegendrehmoment ausreicht, um mit der Drehmomenterkennungsschaltung 234 ein Signal an die Steuerlogik 200 zu geben.

Erhält die Steuerlogik 200 ein Signal durch die Drehmomenterkennungsschaltung 234, so führt dies dazu, daß die Steuerlogik 200 sofort die Ansteuerung des Elektromotors 82 unterbricht und die vorgesehene Drehrichtung invertiert. D. h. die Schaltrelais 206 und 208 werden umgekehrt angesteuert als vor Erhalt des Signals aus der Drehmomenterkennungsschaltung 234.

Ferner ist die erfindungsgemäße Steuerung 190 mit einem mit der Steuerlogik 200 verbundenen Startschalter 240, beispielsweise in Form eines Tasters, versehen. Wird der Startschalter 240 dann betätigt, wenn der Kugelhals 14 mit der Kupplungskugel 12 entweder in Arbeitsstellung A oder Ruhestellung R steht, so betätigt die Steuerlogik 200 die Schaltrelais 206 und 208 derart, daß der Motor 82 mit der Drehrichtung anläuft, welche erforderlich ist, um den Kugelhals 14 mit der Kupplungskugel 12 in die jeweils andere Stellung zu verschwenken. D. h. bei in Arbeitsstellung A stehendem Kupplungshals 14 wird der Elektromotor 82 so anlaufen, daß ein Verschwenken desselben in Richtung der Ruhestellung R erfolgt, während bei in Ruhestellung R stehendem Kugelhals 14 der Motor 82 so anlaufen wird, daß ein Verschwenken desselben in Richtung der Arbeitsstellung A erfolgt.

Bereits nach einmaligem Betätigen des Startschalters 214 läuft der Elektromotor 82 so lange, bis die jeweilige Endstellung, d. h. die Ruhestellung oder die Arbeitsstellung, erreicht ist und durch die Sensoren 202 oder 204 der Steuerlogik gemeldet wird, die dann den Elektromotor 82 abschaltet.

Der Startschalter 240 dient ferner noch gleichzeitig als Notausschalter, denn ein Betätigen des Startschalters 240 in einer Stellung des Kugelhalses 14, die weder der Arbeitsstellung A noch der Ruhestellung R entspricht, veranlaßt die Steuerlogik 200, die Laufrichtung des Motors 82 umzukehren, d. h. die Schaltrelais 206 und 208 werden in umgekehrter Weise angesteuert, so daß der Kugelhals 14 in Richtung der Endstellung bewegt wird, aus welcher er vor Betätigen des Startschalters 240 als Notausschalter herausbewegt wurde.

Ferner ist die Steuerlogik 200 noch mit einem Melderelais 250 verbunden. Dieses Melderelais 250 steuert mit einer Motorsteuerung 260 des Kraftfahrzeugs 36 verbundene Kontakte 252, wobei beispielsweise bei in einer ersten Stellung stehenden Kontakten 252 die Motorsteuerung 260 ein Laufen des Motors des Kraftfahrzeugs 36 ermöglicht, während bei einer zweiten Stellung der Kontakte 252 des Melderelais 250 und somit angesteuertem Melderelais 250 die Motorsteuerung 260 ein Laufen des Motors des Kraftfahrzeugs 36 nicht mehr zuläßt. Die Steuerlogik 200 betätigt stets dann das Melderelais 250, wenn der Elektromotor 82 zum Verschwenken des Kupplungshalses 14 angesteuert wird, so daß sichergestellt ist, daß ein Schwenken des Kupplungshalses 14 zwischen der Arbeitsstellung A und der Ruhestellung R nicht bei fahrendem Kraftfahrzeug 36 erfolgen kann.

Ferner steuert die Motorsteuerung 260 ein Melderelais 270 an, dessen Kontakte 272 mit der Steuerlogik 200 verbunden sind, wobei beispielsweise die Kontakte 272 bei nichtlaufendem Motor des Kraftfahrzeugs 36 in einer ersten Stellung stehen, welche der Steuerlogik 200 die Information vermittelt, daß ein Verschwenken des Kugelhalses 14 möglich ist, während bei laufendem Motor des Kraftfahrzeugs 36 die Kontakte 272 in einer zweiten Stellung stehen und somit der Steuerlogik 200 die Information vermitteln, daß eine Betätigung des Startschalters 240 unberücksichtigt bleiben soll und der Elektromotor 82 nicht anlaufen darf.

## Patentansprüche

1. Anhängekupplung für Kraftfahrzeuge, insbesondere Personenkraftfahrzeuge, mit einer Kupplungskugel (12), mit einem Kugelhals (14), dessen einer Endbereich (16) abgekröpft ist und die Kupplungskugel (12) trägt und dessen anderer Endbereich (18) mit einem Lagerelement (20) verbunden ist, mit einem das Lagerelement (20) schwenkbar lagernden Schwenklager (22), wobei der Kugelhals (14) mit der Kupplungskugel (12) durch Verschwenken um die Schwenkachse (30) von einer Arbeitsstellung (A), in welcher sich der Kugelhals (14) im wesentlichen längs einer zur Fahrzeuglängsrichtung (34) parallelen vertikalen Längsebene (60) erstreckt, in eine Ruhestellung (R), bewegbar ist,
**dadurch gekennzeichnet, daß** in der Ruhestellung (R) die Einheit aus Kugelhals (14R) und Kupplungskugel (12R) in einer vom Stoßfänger (38) gegen Sicht abgedeckten und somit oberhalb einer 15° Sichtlinie liegenden Stellung steht und die Bodenfreiheit nicht negativ beeinträchtigt, daß zur Durchführung der Bewegung von der Arbeitsstellung (A) in die Ruhestellung (R) und umgekehrt ein einen Motor (82) aufweisender Antrieb (80) vorgesehen ist, daß zum Ansteuern des den Motor (82) aufweisenden Antriebs (80) für das Bewegen von Kugelhals (14) und Kupplungskugel (12) zwischen der Arbeitsstellung (A) und der Ruhestellung (R) eine Steuerung (190) zum Betreiben des Motors (82) vorgesehen ist, und daß die Steuerung (190) ein Bewegen des Kugelhalses (14) beim Fahren des Fahrzeugs (36) verhindert.

2. Anhängekupplung nach Anspruch 1, **dadurch gekennzeichnet, daß** eine Steuerung (190) für den Motor (82) vorgesehen ist, die die Arbeitsstellung (A) durch einen dieser Stellung zugeordneten Sensor (202) erfaßt.

3. Anhängekupplung nach Anspruch 2, **dadurch gekennzeichnet, daß** die Steuerung (190) die Arbeitsstellung (A) des Kugelhalses (14) über einen die verriegelnde Stellung der Verriegelungsvorrichtung (110) erfassenden Sensor (202) erkennt.

4. Anhängekupplung nach Anspruch 2 oder 3, **dadurch gekennzeichnet, daß** die Steuerung (190) die Ruhestellung (R) des Kugelhalses (14) über einen dieser Stellung zugeordneten Sensor (204) erfaßt.

5. Anhängekupplung nach einem der voranstehenden Ansprüche, **dadurch gekennzeichnet, daß** eine Steuerung (190) für den Motor (82) vorgesehen ist, die nach einem einmaligen Betätigen eines Schaltelements (240) den Motor (82) so lange mit Strom speist, bis der Kugelhals (14) entweder die Arbeitsstellung (A) oder die Ruhestellung (R) erreicht hat.

6. Anhängekupplung nach einem der voranstehenden Ansprüche, **dadurch gekennzeichnet, daß** eine Steuerung (190) für den Motor (82) vorgesehen ist, die nach einem Betätigen des Schaltelements (240) im Verlauf der Bewegung des Kugelhalses (14) zwischen der Arbeitsstellung (A) und der Ruhestellung (R) die bis zu diesem Betätigen bestehende Bewegungsrichtung umkehrt.

7. Anhängekupplung nach einem der voranstehenden Ansprüche, **dadurch gekennzeichnet, daß** eine Steuerung (190) für den Motor (82) vorgesehen ist, die eine Drehmomenterkennung (234) für den Antrieb (80) umfaßt, welche ein Überschreiten einer Drehmomentschwelle des Antriebs (80) erkennt.

8. Anhängekupplung nach Anspruch 7, **dadurch gekennzeichnet, daß** die Drehmomenterkennung (234) bei Überschreiten der Drehmomentschwelle ein Signal abgibt, welches die Steuerung (190) veranlaßt, die bisherige Bewegungsrichtung umzukehren.

9. Anhängekupplung nach Anspruch 7 oder 8, **dadurch gekennzeichnet, daß** die Drehmomentschwelle in der Arbeitsstellung (A) und der Ruhestellung (R) bis zum Verlassen derselben höher liegt als danach.

10. Anhängekupplung nach einem der Ansprüche 7 bis 9, **dadurch gekennzeichnet, daß** die Drehmomenterkennung (234) die Stromaufnahme des Motors (82) erfaßt.

11. Anhängekupplung nach einem der voranstehenden Ansprüche, **dadurch gekennzeichnet, daß** der Kugelhals (14R) in der Ruhestellung (R) in einem Ruhestellungsraum (78) angeordnet ist, welcher oberhalb einer durch eine Bodengruppe der Fahrzeugkarosserie (54) und der Stoßfängereinheit (38) definierten bodenseitigen Fläche (79) des Kraftfahrzeugs (36) liegt.

12. Anhängekupplung nach einem der voranstehenden Ansprüche **dadurch gekennzeichnet, daß** bei in der Ruhestellung stehender Kupplungskugel (12R) der sich an diese anschließende abgekröpfte Endbereich (16R) des Kugelhalses (14R) von einer der Fahrbahnoberfläche (72) abgewandten Seite der Kupplungskugel (12R) ausgehend erstreckt.

13. Anhängekupplung nach einem der voranstehenden Ansprüche, **dadurch gekennzeichnet, daß** der abgekröpfte Endbereich (16) des Kugelhalses (14) in der Ruhestellung (R) auf einer der Fahrbahnoberfläche (72) abgewandten Seite einer horizontalen Ebene (77) liegt, welche in Höhe eines tiefsten Punktes (PR) der in Ruhestellung (R) stehenden Kupplungskugel (12R) verläuft.

14. Anhängekupplung nach Anspruch 13, **dadurch gekennzeichnet, daß** die horizontale Ebene (77) mindestens in Höhe eines tiefsten Punktes (PA) des in Arbeitsstellung (A) stehenden Kugelhases (14A) liegt.

15. Anhängekupplung nach Anspruch 13 oder 14, **dadurch gekennzeichnet, daß** der gesamte Kugelhals (14R) in der Ruhestellung (R) auf der der Fahrbahnoberfläche (72) abgewandten Seite der horizontalen Ebene (77) liegt, die in Höhe des tiefsten Punktes (PR) der in Ruhestellung (R) stehenden Kupplungskugel (12R) verläuft.

16. Anhängekupplung nach einem der voranstehenden Ansprüche, **dadurch gekennzeichnet, daß** die Kupplungskugel (12R) in der Ruhestellung (R) in einem Abstand von einer Fahrbahnoberfläche (72) angeordnet ist, der gleich oder kleiner ist als ein Abstand des abgekröpften Endbereichs (16) von der Fahrbahnoberfläche.

17. Anhängekupplung nach Anspruch 16, **dadurch gekennzeichnet, daß** ein tiefster Punkt (PR) von Kugelhals (14R) oder Kupplungskugel (12R) in der Ruhestellung (R) mindestens in Höhe eines tiefsten Punktes (PA) des Kugelhalses (14A) in der Arbeitsstellung (A) liegt.

18. Anhängekupplung nach einem der voranstehenden Ansprüche, **dadurch gekennzeichnet, daß** der Kugelhals (14R) und die Kupplungskugel (12R) in der Ruhestellung (R) auf einer der Fahrbahnoberfläche (72) abgewandten Seite einer durch eine Unterkante des Schwenklagers (22) definierten horizontalen Ebene (76) liegen.

19. Anhängekupplung nach einem der voranstehenden Ansprüche, **dadurch gekennzeichnet, daß** die Schwenkachse (30) schräg zu der zur Fahrzeuglängsrichtung (34) parallelen vertikalen Längsebene (60) ausgerichtet ist.

20. Anhängekupplung nach einem der voranstehenden Ansprüche, **dadurch gekennzeichnet, daß** die Schwenkachse (30) schräg zu der zur Fahrzeuglängsrichtung (34) parallelen vertikalen Längsebene (60) ausgerichtet ist, daß eine Projektion einer Kupplungskugelmittelachse (70) auf die vertikale Längsebene (60) beim Schwenken des Kugelhalses (14) um die Schwenkachse (30) von der Arbeitsstellung (A) in die Ruhestellung (R) eine Drehung um einen Winkel von mindestens 80° erfährt und daß ein tiefster Punkt (PR) von Kugelhals (14R) und Kupplungskugel (12R) in der Ruhestellung (R) mindestens in Höhe eines tiefsten Punkts (PA) des Kugelhalses (14A) in der Arbeitsstellung (A) liegt.

21. Anhängekupplung nach Anspruch 20, **dadurch gekennzeichnet, daß** die Projektion der Kupplungskugelmittelachse (70) auf die vertikale Längsebene (60) eine Drehung um mehr als 120° erfährt.

22. Anhängekupplung nach einem der voranstehenden Ansprüche, **dadurch gekennzeichnet, daß** die Schwenkachse (30) schräg zu der zur Fahrzeuglängsrichtung (34) parallelen vertikalen Längsebene (60) ausgerichtet ist und daß die Projektion der Schwenkachse (30) auf eine zur Fahrzeuglängsrichtung (34) parallele vertikale Längsebene (60) in einem Winkel (β) gegenüber der Horizontalen (64) geneigt ist, welcher in einem Winkelbereich von ungefähr 0° bis ungefähr 60° liegt.

23. Anhängekupplung nach Anspruch 22, **dadurch gekennzeichnet, daß** der Winkelbereich bis maximal ungefähr 50° reicht.

24. Anhängekupplung nach Anspruch 22 oder 23, **dadurch gekennzeichnet, daß** der Winkelbereich bei mindestens ungefähr 15° beginnt.

25. Anhängekupplung nach einem der voranstehenden Ansprüche, **dadurch gekennzeichnet, daß** die Schwenkachse (30) schräg zu der zur Fahrzeuglängsrichtung (34) parallelen vertikalen Längsebene (60) ausgerichtet ist und daß die Projektion der Schwenkachse (30) auf eine horizontale Ebene (62) um einen Winkel (α) schräg zur Fahrzeuglängsrichtung (34) verläuft, welcher in einem Winkelbereich von ungefähr 20° bis ungefähr 70° liegt.

26. Anhängekupplung nach Anspruch 25, **dadurch gekennzeichnet, daß** der Winkelbereich zwischen ungefähr 30° und ungefähr 65° liegt.

27. Anhängekupplung nach einem der voranstehenden Ansprüche, **dadurch gekennzeichnet, daß** die Schwenkachse (30) schräg zu der zur Fahrzeuglängsrichtung (34) parallelen vertikalen Längsebene (60) ausgerichtet ist und daß die Projektion der Schwenkachse (30) auf eine vertikale, senkrecht zur Fahrzeuglängsrichtung (34) verlaufende Querebene (66) in einem Winkel (γ) gegenüber der Horizontalen (68) geneigt ist, welcher in einem Winkelbereich von ungefähr 0° bis ungefähr 60° liegt.

28. Anhängekupplung nach einem der voranstehenden Ansprüche, **dadurch gekennzeichnet, daß** die Schwenkachse (30) die einzige Schwenkachse des Schwenklagers (22) ist.

29. Anhängekupplung nach einem der voranstehenden Ansprüche, **dadurch gekennzeichnet, daß** sich der Kugelhals in der Ruhestellung ungefähr quer zu der vertikalen Längsebene (60) erstreckt.

30. Anhängekupplung nach einem der voranstehenden Ansprüche, **dadurch gekennzeichnet, daß** der Kugelhals (14) mit der Kupplungskugel (12) manuell zwischen der Arbeitsstellung (A) und der Ruhestellung (R) bewegbar ist.

31. Anhängekupplung nach einem der voranstehenden Ansprüche, **dadurch gekennzeichnet, daß** der Kugelhals (14A) in der Arbeitsstellung (A) durch eine Verriegelungsvorrichtung (110) fixierbar ist.

32. Anhängekupplung nach Anspruch 31, **dadurch gekennzeichnet, daß** die Verriegelungsvorrichtung (110) so ausgebildet ist, daß sie bei Erreichen der Arbeitsstellung (A) des Kugelhalses (14A) selbsttätig in eine verriegelnde Stellung übergeht und den Kugelhals (14A) in der Arbeitsstellung (A) fixiert.

33. Anhängekupplung nach Anspruch 32, **dadurch gekennzeichnet, daß** die Verriegelungsvorrichtung (110) zum Lösen der verriegelnden Stellung über einen Auslöser betätigbar ist.

34. Anhängekupplung nach einem der voranstehenden Ansprüche, **dadurch gekennzeichnet, daß** das Schwenklager (22) an einem ungefähr in derselben Orientierung wie der hintere Stoßfänger (38) quer zur Fahrzeuglängsrichtung (34) verlaufenden Querträgerkörper (32) gehalten ist.

35. Anhängekupplung nach Anspruch 34, **dadurch gekennzeichnet, daß** der Querträgerkörper (32) zwischen zwei Seitenträgern (40, 42) angeordnet und mit diesen verbunden ist.

36. Anhängekupplung nach Anspruch 35, **dadurch gekennzeichnet, daß** der Querträgerkörper (32) über eine bezogen auf eine quer zur Fahrzeuglängsrichtung (34) verlaufende Querachse (40) in verschiedenen Drehstellungen fixierbare Verbindung (136, 138; 142, 144) mit den Seitenträgern (40, 42) verbindbar ist.

37. Anhängekupplung nach einem der Ansprüche 34 bis 36, **dadurch gekennzeichnet, daß** der Kugelhals (14R) in der Ruhestellung (R) sich zumindest abschnittsweise längs des Querträgerkörpers (32) erstreckt.

38. Anhängekupplung nach Anspruch 37, **dadurch gekennzeichnet, daß** der Kugelhals (14R) in der Ruhestellung (R) in ungefähr gleichbleibendem Abstand von einer diesem zugewandten Seite des Querträgerkörpers (32) verläuft.

39. Anhängekupplung nach Anspruch 37 oder 38, **dadurch gekennzeichnet, daß** der Kugelhals (14R) mit der Kupplungskugel (12R) in der Ruhestellung (R) so liegt, daß eine Verbindungslinie zwischen dem Lagerelement (20) und der Kupplungskugel (12R) ungefähr längs des Querträgerkörpers (32) verläuft.

40. Anhängekupplung nach einem der Ansprüche 34 bis 39, **dadurch gekennzeichnet, daß** der Kugelhals (14R) und die Kupplungskugel (12R) in der Ruhestellung (R) zwischen den Enden (46, 48) des Querträgerkörpers (32) liegen.

41. Anhängekupplung nach einem der Ansprüche 34 bis 40, **dadurch gekennzeichnet, daß** an dem Querträgerkörper (32) der Antrieb (80) für das Schwenken des Kugelhalses (14) gehalten ist.

42. Anhängekupplung nach einem der Ansprüche 34 bis 41, **dadurch gekennzeichnet, daß** an dem Querträgerkörper (32) die Verriegelungsvorrichtung (110) angeordnet ist.

43. Anhängekupplung nach einem der Ansprüche 34 bis 42, **dadurch gekennzeichnet, daß** der Antrieb (80) für die Bewegung des Kugelhalses (14) auf einer der Ruhestellung (R) von Kugelhals (14R) und Kupplungskugel (12R) gegenüberliegenden Seite des Schwenklagers (22) angeordnet ist.

## Claims

1. Trailer coupling for motor vehicles, in particular, passenger vehicles, comprising a coupling ball (12), a ball neck (14), one end region (16) thereof being angled and bearing the coupling ball (12), and the other end region (18) thereof being connected to a bearing element (20), a pivot bearing (22) pivotally mounting the bearing element (20), the ball neck (14) with the coupling ball (12) being movable as a result of pivoting about the pivot axis (30) from an operative position (A),
in which the ball neck (14) extends essentially along a vertical longitudinal plane (60) parallel to the longitudinal direction (34) of the vehicle, into a rest position (R), **characterized in that** in the rest position (R) the unit consisting of ball neck (14R) and coupling ball (12R) stands in a position which is covered from sight by the bumper (38) and is thus located above a 15° line of sight and does not negatively affect the ground clearance, **in that** a drive (80) having a motor (82) is provided for carrying out the movement from the operative position (A) to the rest position (R) and vice-versa, **in that** a control means (190) for operating the motor (82) is provided for controlling the drive (80) having the motor (82) for moving ball neck (14) and coupling ball (12) between the operative position (A) and the rest position (R), and **in that** the control means (190) prevents movement of the ball neck (14) when the vehicle (36) is travelling.

2. Trailer coupling as defined in claim 1, **characterized in that** a control means (190) for the motor (82) is provided for detecting the operative position (A) by means of a sensor (202) associated with this position.

3. Trailer coupling as defined in claim 2, **characterized in that** the control means (190) detects the operative position (A) of the ball neck (14) via a sensor (202) detecting the locking position of the locking device (110).

4. Trailer coupling as defined in claim 2 or 3, **characterized in that** the control means (190) detects the rest position (R) of the ball neck (14) via a sensor (204) associated with this position.

5. Trailer coupling as defined in any one of the preceding claims, **characterized in that** a control means (190) for the motor (82) is provided, which, after a single actuation of a switching element (240), supplies the motor (82) with current for such a time until the ball neck (14) has reached either the operative position (A) or the rest position (R).

6. Trailer coupling as defined in any one of the preceding claims, **characterized in that** a control means (190) for the motor (82) is provided, which, after an actuation of the switching element (240) in the course of the movement of the ball neck (14) between the operative position (A) and the rest position (R) reverses the direction of movement existing up to this actuation.

7. Trailer coupling as defined in any one of the preceding claims, **characterized in that** a control means (190) for the motor (82) is provided, which comprises a torque detection (234) for the drive (80), which torque detection detects an overrunning of a torque threshold of the drive (80).

8. Trailer coupling as defined in claim 7, **characterized in that** when the torque threshold is exceeded, the torque detection (234) generates a signal which causes the control means (190) to reverse the previous direction of movement.

9. Trailer coupling as defined in claim 7 or 8, **characterized in that** the torque threshold in the operative position (A) and the rest position (R) is higher prior to leaving the same than thereafter.

10. Trailer coupling as defined in any one of claims 7 to 9, **characterized in that** the torque detection (234) detects the current consumption of the motor (82).

11. Trailer coupling as defined in any one of the preceding claims, **characterized in that** the ball neck (14R) in the rest position (R) is arranged in a rest position space (78) which is located above a surface (79) of the motor vehicle (36) on the road side, which is defined by an underbody structure of the vehicle body (54) and the bumper unit (38).

12. Trailer coupling as defined in any one of the preceding claims, **characterized in that** when the coupling ball (12R) is located in the rest position, the angled end region (16R) of the ball neck (14R) adjoining it extends from a side of the coupling ball (12R) facing away from the road surface (72).

13. Trailer coupling as defined in any one of the preceding claims, **characterized in that** the angled end region (16) of the ball neck (14) in the rest position (R) is located on a side, facing away from the road surface (72), of a horizontal plane (77) extending at the level of a lowest point (PR) of the coupling ball (12R) located in rest position (R).

14. Trailer coupling as defined in claim 13, **characterized in that** the horizontal plane (77) is located at least at the level of a lowest point (PA) of the ball neck (14A) located in operative position (A).

15. Trailer coupling as defined in claim 13 or 14, **characterized in that** the entire ball neck (14R) is located in the rest position (R) on the side, facing away from the road surface (72), of the horizontal plane (77) extending at the level of the lowest point (PR) of the coupling ball (12R) located in rest position (R).

16. Trailer coupling as defined in any one of the preceding claims, **characterized in that** the coupling ball (12R) in the rest position (R) is arranged at a distance from a road surface (72) equal to or smaller than a distance of the angled end region (16) from the road surface.

17. Trailer coupling as defined in claim 16, **characterized in that** a lowest point (PR) of ball neck (14R) or coupling ball (12R) in the rest position (R) is at least at the level of a lowest point (PA) of the ball neck (14A) in the operative position (A).

18. Trailer coupling as defined in any one of the preceding claims, **characterized in that** the ball neck (14R) and the coupling ball (12R) in the rest position (R) are located on a side, facing away from the road surface (72), of a horizontal plane (76) defined by a lower edge of the pivot bearing (22).

19. Trailer coupling as defined in any one of the preceding claims, **characterized in that** the pivot axis (30) is aligned obliquely to the vertical longitudinal plane (60) parallel to the longitudinal direction (34) of the vehicle.

20. Trailer coupling as defined in any one of the preceding claims, **characterized in that** the pivot axis (30) is aligned obliquely to the vertical longitudinal plane (60) parallel to the longitudinal direction (34) of the vehicle, **in that** a projection of a coupling ball central axis (70) onto the vertical longitudinal plane (60) undergoes a rotation through an angle of at least 80° during pivoting of the ball neck (14) about the pivot axis (30) from the operative position (A) into the rest position (R), and **in that** a lowest point (PR) of ball neck (14R) and coupling ball (12R) in the rest position (R) is at least at the level of a lowest point (PA) of the ball neck (14A) in the operative position (A).

21. Trailer coupling as defined in claim 20, **characterized in that** the projection of the coupling ball central axis (70) onto the vertical longitudinal plane (60) undergoes a rotation through more than 120°.

22. Trailer coupling as defined in any one of the preceding claims, **characterized in that** the pivot axis (30) is aligned obliquely to the vertical longitudinal plane (60) parallel to the longitudinal direction (34) of the vehicle, and **in that** the projection of the pivot axis (30) onto a vertical longitudinal plane (60) parallel to the longitudinal direction (34) of the vehicle is inclined at an angle (β) in relation to the horizontal (64), which lies in an angular range of approximately 0° to approximately 60°.

23. Trailer coupling as defined in claim 22, **characterized in that** the angular range is up to approximately 50° at the most.

24. Trailer coupling as defined in claim 22 or 23, **characterized in that** the angular range begins at at least approximately 15°.

25. Trailer coupling as defined in any one of the preceding claims, **characterized in that** the pivot axis (30) is aligned obliquely to the vertical longitudinal plane (60) parallel to the longitudinal direction (34) of the vehicle, and **in that** the projection of the pivot axis (30) onto a horizontal plane (62) extends through an angle (α) at an incline to the longitudinal direction (34) of the vehicle, which lies in an angular range of approximately 20° to approximately 70°.

26. Trailer coupling as defined in claim 25, **characterized in that** the angular range lies between approximately 30° and approximately 65°.

27. Trailer coupling as defined in any one of the preceding claims, **characterized in that** the pivot axis (30) is aligned obliquely to the vertical longitudinal plane (60) parallel to the longitudinal direction (34) of the vehicle, and **in that** the projection of the pivot axis (30) onto a vertical transverse plane (66) extending at right angles to the longitudinal direction (34) of the vehicle is inclined at an angle (γ) in relation to the horizontal (68), which lies in an angular range of approximately 0° to approximately 60°.

28. Trailer coupling as defined in any one of the preceding claims, **characterized in that** the pivot axis (30) is the only pivot axis of the pivot bearing (22).

29. Trailer coupling as defined in any one of the preceding claims, **characterized in that** in the rest position the ball neck extends approximately transversely to the vertical longitudinal plane (60).

30. Trailer coupling as defined in any one of the preceding claims, **characterized in that** the ball neck (14) with the coupling ball (12) is manually movable between the operative position (A) and the rest position (R).

31. Trailer coupling as defined in any one of the preceding claims, **characterized in that** the ball neck (14A) is fixable in the operative position (A) by a locking device (110).

32. Trailer coupling as defined in claim 31, **characterized in that** the locking device (110) is designed such that when the operative position (A) of the ball neck (14A) is reached it transfers automatically into a locking position and fixes the ball neck (14A) in the operative position (A).

33. Trailer coupling as defined in claim 32, **characterized in that** the locking device (110) is adapted to be actuated via a release device for releasing the locking position.

34. Trailer coupling as defined in any one of the preceding claims, **characterized in that** the pivot bearing (22) is held on a transverse support member (32) extending transversely to the longitudinal direction (34) of the vehicle approximately in the same orientation as the rear bumper (38).

35. Trailer coupling as defined in claim 34, **characterized in that** the transverse support member (32) is arranged between two side supports (40, 42) and connected to these.

36. Trailer coupling as defined in claim 35, **characterized in that** the transverse support member (32) is connectable to the side supports (40, 42) via a connection (136, 138; 142, 144) which is fixable in various rotary positions in relation to a transverse axis (40) extending transversely to the longitudinal direction (34) of the vehicle.

37. Trailer coupling as defined in any one of claims 34 to 36, **characterized in that** the ball neck (14R) in the rest position (R) extends at least in sections along the transverse support member (32).

38. Trailer coupling as defined in claim 37, **characterized in that** the ball neck (14R) in the rest position (R) extends at an approximately constant distance from a side of the transverse support member (32) facing it.

39. Trailer coupling as defined in claim 37 or 38, **characterized in that** the ball neck (14R) with the coupling ball (12R) is located in the rest position (R) such that a connecting line between the bearing element (20) and the coupling ball (12R) extends approximately along the transverse support member (32).

40. Trailer coupling as defined in any one of claims 34 to 39, **characterized in that** the ball neck (14R) and the coupling ball (12R) are located in the rest position (R) between the ends (46, 48) of the transverse support member (32).

41. Trailer coupling as defined in any one of claims 34 to 40, **characterized in that** the drive (80) for pivoting the ball neck (14) is held on the transverse support member (32).

42. Trailer coupling as defined in any one of claims 34 to 41, **characterized in that** the locking device (110) is arranged on the transverse support member (32).

43. Trailer coupling as defined in any one of claims 34 to 42, **characterized in that** the drive (80) for the movement of the ball neck (14) is arranged on a side of the pivot bearing (22) located opposite the rest position (R) of ball neck (14R) and coupling ball (12R).

## Revendications

1. Attelage de remorque pour véhicules automobiles, en particulier pour des voitures de tourisme, comprenant une rotule d'attelage (12), un col de rotule (14) dont une première zone d'extrémité (16) est coudée et porte la rotule d'attelage (12), et dont l'autre zone d'extrémité (18) est reliée à un tourillon (20), un palier de pivotement (22), logeant le tourillon (20) de façon pivotante, où le col de rotule (14), avec la rotule d'attelage (12), peut, par pivotement autour de l'axe de pivotement (30), être déplacé d'une position de travail (A), dans laquelle le col de rotule (14) s'étend pratiquement le long d'un plan longitudinal (60) vertical, parallèle à la direction longitudinale (34) du véhicule, à une position de repos (R),
**caractérisé par le fait qu'**en position de repos (R), l'ensemble se composant du col de rotule (14R) et de la rotule d'attelage (12R) est dans une position cachée à la vue par le pare-chocs (38) et se trouve par conséquent au-dessus d'une ligne de vision à 15° et ne gêne pas négativement la garde au sol, **par le fait qu'**il est prévu un moyen d'entraînement (80) comprenant un moteur (82) pour l'exécution du mouvement faisant passer de la position de travail (A) à la position de repos (R) et inversement, **par le fait que**, pour commander un moyen d'entraînement (80) comprenant un moteur (82), pour le mouvement du col de rotule (14) et de la rotule d'attelage (12) entre la position de travail (A) et la position de repos (R), il est prévu un circuit de commande (190) pour commander le moteur (82), et **par le fait que** le circuit de commande (190) empêche un mouvement du col de rotule (14) lorsque le véhicule (36) se déplace.

2. Attelage de remorque selon la revendication 1, **caractérisé par le fait qu'**il est prévu, pour le moteur (82), un circuit de commande (190) qui détecte la position de travail (A) du col de rotule (14) au moyen d'un capteur (202) affecté à cette position.

3. Attelage de remorque selon la revendication 2, **caractérisé par le fait que** le circuit de commande (190) reconnaît la position de travail (A) du col de rotule (14) au moyen d'un capteur (202) détectant la position de verrouillage du dispositif de verrouillage (110).

4. Attelage de remorque selon la revendication 2 ou 3, **caractérisé par le fait que** le circuit de commande (190) détecte la position de repos (R) du col de rotule (14) au moyen d'un capteur (204) affecté à cette position.

5. Attelage de remorque selon l'une des revendications précédentes, **caractérisé par le fait qu'**il est prévu, pour le moteur (82), un circuit de commande (190) qui, après un seul actionnement d'un élément de commutation (240), alimente le moteur (82) en courant, jusqu'à ce que le col de rotule (14) ait atteint soit la position de travail (A), soit la position de repos (R).

6. Attelage de remorque selon l'une des revendications précédentes, **caractérisé par le fait qu'**il est prévu, pour le moteur (82), un circuit de commande (190) qui, après un actionnement de l'élément de commutation (240) au cours du mouvement du col de rotule (14), entre la position de travail (A) et la position de repos (R), inverse le sens du mouvement existant jusqu'à cet actionnement.

7. Attelage de remorque selon l'une des revendications précédentes, **caractérisé par le fait qu'**il est prévu, pour le moteur (82), un circuit de commande (190) qui comporte, pour le moyen d'entraînement (80), une reconnaissance du moment de rotation (234) qui détecte un dépassement de la limite supérieure d'une valeur de seuil du moment de rotation du moyen d'entraînement (80).

8. Attelage de remorque selon la revendication 7, **caractérisé par le fait que** la reconnaissance du moment de rotation (234), lors d'un dépassement de la limite supérieure de la valeur de seuil du moment de rotation, émet un signal qui amène le circuit de commande (190) à inverser le sens du mouvement existant jusque-là.

9. Attelage de remorque selon la revendication 7 ou 8, **caractérisé par le fait que** dans la position de travail (A) et la position de repos (R), jusqu'au moment de quitter ces positions, la valeur de seuil du moment de rotation se situe à un plus haut niveau, qu'après.

10. Attelage de remorque selon l'une des revendications 7 à 9, **caractérisé par le fait que** la reconnaissance du moment de rotation (234) détecte la consommation de courant du moteur (82).

11. Attelage de remorque selon l'une des revendications précédentes, **caractérisé par le fait qu'**en position de repos (R), le col de rotule (14R) est disposé dans un espace de position de repos (78) qui se situe au-dessus d'une surface (79) du véhicule automobile (36), côté sol, définie par un dessous de caisse de la carrosserie (54) du véhicule et de l'ensemble du pare-chocs (38).

12. Attelage de remorque selon l'une des revendications précédentes, **caractérisé par le fait que** lorsque la rotule d'attelage (12R) est en position de repos, la zone d'extrémité coudée (16R) du col de rotule (14R), faisant suite à cette rotule d'attelage, s'étend en partant d'un côté de la rotule d'attelage (12R), placé à l'opposé de la surface de la chaussée (72).

13. Attelage de remorque selon l'une des revendications précédentes, **caractérisé par le fait que** la zone d'extrémité coudée (16) du col de rotule (14), en position de repos (R), se situe sur un côté, placé à l'opposé de la surface de la chaussée (72), d'un plan horizontal (77) qui s'étend au niveau d'un point le plus bas (PR) de la rotule d'attelage (12R) se trouvant en position de repos (R).

14. Attelage de remorque selon la revendication 13, **caractérisé par le fait que** le plan horizontal (77) se situe au moins au niveau d'un point le plus bas (PA) du col de rotule (14A) se trouvant en position de travail (A).

15. Attelage de remorque selon la revendication 13 ou 14, **caractérisé par le fait qu'**en position de repos (R), la totalité du col de rotule (14R) se situe sur le côté, placé à l'opposé de la surface de la chaussée (72), du plan horizontal (77) qui s'étend au niveau du point le plus bas (PR) de la rotule d'attelage (12R) se trouvant en position de repos (R).

16. Attelage de remorque selon l'une des revendications précédentes, **caractérisé par le fait qu'**en position de repos (R), la rotule d'attelage (12R) est disposée à une distance, par rapport à une surface de la chaussée (72), qui est égale ou inférieure à une distance comprise entre la zone d'extrémité coudée (16) et la surface de la chaussée.

17. Attelage de remorque selon la revendication 16, **caractérisé par le fait qu'**en position de repos (R), un point le plus bas (PR) du col de rotule (14R) et ou de la rotule d'attelage (12R) se situe au moins au niveau d'un point le plus bas (PA) du col de rotule (14A) en position de travail (A).

18. Attelage de remorque selon l'une des revendications précédentes, **caractérisé par le fait que** le col de rotule (14R) et la rotule d'attelage (12R), en position de repos (R), se situent sur un côté, placé à l'opposé de la surface de la chaussée (72), d'un plan horizontal (76) défini par un bord inférieur du palier de pivotement (22).

19. Attelage de remorque selon l'une des revendications précédentes, **caractérisé par le fait que** l'axe de pivotement (30) est orienté de façon oblique par rapport au plan longitudinal (60) vertical, parallèle à la direction longitudinale (34) du véhicule.

20. Attelage de remorque selon l'une des revendications précédentes, **caractérisé par le fait que** l'axe de pivotement (30) est orienté de façon oblique par rapport au plan longitudinal (60) vertical, parallèle à la direction longitudinale (34) du véhicule, **par le fait que** lors du pivotement du col de rotule (14) autour de l'axe de pivotement (30), pour passer de la position de travail (A) à la position de repos (R), une projection d'un axe médian (70) de la rotule d'attelage, sur le plan longitudinal (60) vertical, accomplit une rotation suivant un angle d'au moins 80°, et **par le fait qu'**en position de repos (R), un point le plus bas (PR) du col de rotule (14R) et de la rotule d'attelage (12R) se situe au moins au niveau d'un point le plus bas (PA) du col de rotule (14A) en position de travail (A).

21. Attelage de remorque selon la revendication 20, **caractérisé par le fait que** la projection de l'axe médian (70) de la rotule d'attelage, sur le plan longitudinal (60) vertical, accomplit une rotation de plus de 120°.

22. Attelage de remorque selon l'une des revendications précédentes, **caractérisé par le fait que** l'axe de pivotement (30) est orienté de façon oblique par rapport au plan longitudinal (60) vertical, parallèle à la direction longitudinale (34) du véhicule, et **par le fait que** la projection de l'axe de pivotement (30) sur un plan longitudinal (60) vertical, parallèle à la direction longitudinale (34) du véhicule, est inclinée par rapport à l'horizontale (64), suivant un angle (β) qui se situe dans une plage angulaire variant entre environ 0° et environ 60°.

23. Attelage de remorque selon la revendication 22, **caractérisé par le fait que** la plage angulaire atteint au maximum environ 50°.

24. Attelage de remorque selon la revendication 22 ou 23, **caractérisé par le fait que** la plage angulaire commence au moins à environ 15°.

25. Attelage de remorque selon l'une des revendications précédentes, **caractérisé par le fait que** l'axe de pivotement (30) est orienté de façon oblique par rapport au plan longitudinal (60) vertical, parallèle à la direction longitudinale (34) du véhicule, et **par le fait que** la projection de l'axe de pivotement (30) sur un plan horizontal (62) s'étend de façon oblique par rapport à la direction longitudinale (34) du véhicule, suivant un angle (α) qui se situe dans une plage angulaire variant entre environ 20° et environ 70°.

26. Attelage de remorque selon la revendication 25, **caractérisé par le fait que** la plage angulaire varie entre environ 30° et environ 65°.

27. Attelage de remorque selon l'une des revendications précédentes, **caractérisé par le fait que** l'axe de pivotement (30) est orienté de façon oblique par rapport au plan longitudinal (60) vertical, parallèle à la direction longitudinale (34) du véhicule, et **par le fait que** la projection de l'axe de pivotement (30) sur un plan transversal (66) vertical s'étendant perpendiculairement à la direction longitudinale (34) du véhicule est inclinée par rapport à l'horizontale (68), suivant un angle (γ) qui se situe dans une plage angulaire variant entre environ 0° et environ 60°.

28. Attelage de remorque selon l'une des revendications précédentes, **caractérisé par le fait que** l'axe de pivotement (30) est l'unique axe de pivotement du palier de pivotement (22).

29. Attelage de remorque selon l'une des revendications précédentes, **caractérisé par le fait que** le col de rotule, en position de repos, s'étend à peu près de façon transversale par rapport au plan longitudinal (60) vertical.

30. Attelage de remorque selon l'une des revendications précédentes, **caractérisé par le fait que** le col de rotule (14), avec la rotule d'attelage (12), peut être déplacé manuellement entre la position de travail (A) et la position de repos (R).

31. Attelage de remorque selon l'une des revendications précédentes, **caractérisé par le fait que** le col de rotule (14A) peut être fixé en position de travail (A) par un dispositif de verrouillage (110).

32. Attelage de remorque selon la revendication 31, **caractérisé par le fait que** le dispositif de verrouillage (110) est conçu de façon telle que, lorsque le col de rotule (14A) atteint la position de travail (A), il passe automatiquement en position de verrouillage et fixe le col de rotule (14A) en position de travail (A).

33. Attelage de remorque selon la revendication 32, **caractérisé par le fait que** le dispositif de verrouillage (110) peut être actionné par un organe de libération pour libérer la position de verrouillage.

34. Attelage de remorque selon l'une des revendications précédentes, **caractérisé par le fait que** le palier de pivotement (22) est tenu sur un support transversal (32) s'étendant transversalement par rapport à la direction longitudinale (34) du véhicule, à peu près suivant la même orientation que le pare-chocs arrière (38).

35. Attelage de remorque selon la revendication 34, **caractérisé par le fait que** le support transversal (32) est disposé entre deux supports latéraux (40, 42) et relié à ces mêmes supports.

36. Attelage de remorque selon la revendication 35, **caractérisé par le fait que** le support transversal (32) peut être relié aux supports latéraux (40, 42) au moyen d'une liaison (136, 138 ; 142, 144) qui peut se fixer en différentes positions de rotation en référence à un axe transversal (40) s'étendant transversalement par rapport à la direction longitudinale (34) du véhicule.

37. Attelage de remorque selon l'une des revendications 34 à 36, **caractérisé par le fait qu'**en position de repos (R), le col de rotule (14R) s'étend au moins par sections le long du support transversal (32).

38. Attelage de remorque selon la revendication 37, **caractérisé par le fait qu'**en position de repos (R), le col de rotule (14R) s'étend à distance à peu près constante par rapport à un côté du support transversal (32) tourné vers ledit col de rotule.

39. Attelage de remorque selon la revendication 37 ou 38, **caractérisé par le fait qu'**en position de repos (R), le col de rotule (14R), avec la rotule d'attelage (12R), se situe de façon telle qu'une ligne de liaison entre le tourillon (20) et la rotule d'attelage (12R) s'étende à peu près le long du support transversal (32).

40. Attelage de remorque selon l'une des revendications 34 à 39, **caractérisé par le fait qu'**en position de repos (R), le col de rotule (14R) et la rotule d'attelage (12R) se situent entre les extrémités (46, 48) du support transversal (32).

41. Attelage de remorque selon l'une des revendications 34 à 40, **caractérisé par le fait que** le moyen d'entraînement (80) pour le pivotement du col de rotule (14) est tenu sur le support transversal (32).

42. Attelage de remorque selon l'une des revendications 34 à 41, **caractérisé par le fait que** le dispositif de verrouillage (110) est disposé sur le support transversal (32).

43. Attelage de remorque selon l'une des revendications 34 à 42, **caractérisé par le fait que** le moyen d'entraînement (80), pour le mouvement du col de rotule (14), est disposé sur un côté du palier de pivotement (22), placé en face de la position de repos (R) du col de rotule (14R) et de la rotule d'attelage (12R).
